(19) Europäisches Patentamt
European Patent Office
Office européen des brevets

(11) **EP 0 735 731 B1**

(12) **EUROPEAN PATENT SPECIFICATION**

(45) Date of publication and mention
of the grant of the patent:
**12.05.2004   Bulletin 2004/20**

(51) Int Cl.[7]: **H04L 27/26**

(21) Application number: **96105082.0**

(22) Date of filing: **29.03.1996**

(54) **Multicarrier modulator demodulator, with arrangements for reducing peak power**

Mehrträgenmodulator- und -demodulator mit Einrichtungen zur Verringerung der Spitzenleistung

Modulateur et démodulateur multiporteuses, avec arrangement de réduction du pouvoir maximal

(84) Designated Contracting States:
**DE FR GB**

(30) Priority: **31.03.1995 JP 10021595**
**12.10.1995 JP 26397195**

(43) Date of publication of application:
**02.10.1996   Bulletin 1996/40**

(73) Proprietor: **VICTOR COMPANY OF JAPAN,
LIMITED**
**Kanagawa-ku Yokohama (JP)**

(72) Inventor: **Takahashi, Nobuaki**
**Yamato-shi, Kanagawa-ken (JP)**

(74) Representative:
**Leson, Thomas Johannes Alois, Dipl.-Ing. et al
TBK-Patent,
P.O. Box 20 19 18
80019 München (DE)**

(56) References cited:
**EP-A- 0 594 358       EP-A- 0 719 001
WO-A-94/06231        US-A- 5 381 449**

## Description

This invention relates to an apparatus for generating a frequency division multiplexed signal such as an orthogonal frequency division multiplexed signal. This invention also relates to a decoding apparatus for a frequency division multiplexed signal.

Some of systems for transmitting digital information signals such as digital video signals in limited frequency bands employ orthogonal frequency division multiplexing (OFDM). Examples of digital information signals handled by such OFDM-based transmitting systems are multi-value modulation signals or 256-QAM (quadrature amplitude modulation) signals. In general, OFDM-based transmission is good in suppressing multipath effects and jamming signal effects. Further, the OFDM-based transmission has a good efficiency of frequency use.

Orthogonal frequency division multiplexing (OFDM) employ multiple carriers which are orthogonal with respect to each other.

The multiple carriers are modulated in accordance with independent digital information pieces to be transmitted, respectively. A resultant OFDM signal has a form as a random signal.

The "orthogonal" multiple carriers mean that the spectrums of carriers neighboring one carrier are null at the frequency of the latter carrier.

Data transmission based on OFDM is executed symbol by symbol. Each OFDM transmission symbol interval is composed of a guard interval and an effective symbol interval. The guard interval precedes the effective symbol interval. The guard interval is used for reducing multipath effects. The effective symbol interval is used for transmitting information (data). A part of information transmitted during the effective symbol interval is also transmitted during the guard interval.

A receiver side detects amplitude and phase modulation components of a signal transmitted for every symbol interval, and recovers an information value from the detected amplitude and phase modulation components. For every symbol, a receiver side discards a signal transmitted during a guard interval and uses only a signal transmitted during an effective symbol interval. The signal transmitted during the effective symbol interval is decoded into original data (original information).

In data transmission based on OFDM, a relatively narrow frequency band suffices. In addition, a transmitted signal is hardly subjected to a transmission distortion.

Generally, an OFDM signal is generated by an inverse fast Fourier transform circuit (an IFFT circuit). In the case where a data sequence has a length N equal to $2^L$, the IFFT circuit divides discrete Fourier transform (DFT) of a size N into DFT's of a size N/2, and executes butterfly operations on a multiplexed basis. When an order number is "k", a digital value to be transmitted is fed to real-part and imaginary-part circuit terminals corresponding to "k" so that a signal for transmitting the digital value is generated. Inverse DFT using N complex numbers is implemented during a time interval T, and thereby an OFDM signal is generated. Points of the inverse DFT correspond to multiple carriers respectively.

The information-containing multiple carriers generated by the IFFT circuit are equivalent to the results of modulation of carriers in accordance with information pieces to be transmitted respectively. Since the OFDM signal is a time division multiplexed combination of the information-containing carriers, the OFDM signal has a form as a random signal.

The instantaneous electric power of such an OFDM signal has a chance of peaking to a great value. In the case of an OFDM signal using 256 information-containing carriers having equal electric powers, the instantaneous electric power of the OFDM signal is maximized to 65,536 ($256^2$) times the electric power of one information-containing carrier when peak amplitudes of the 256 information-containing carriers occur at a same moment. In the case where the electric power of one information-containing carrier is 1 mW, the possible instantaneous peak electric power of the OFDM signal is about 65 W although the mean electric power thereof is about 256 mW.

Accordingly, a prior-art OFDM signal generating and transmitting apparatus uses an RF power amplifier which is capable of generating an RF signal having an electric power much greater than a mean electric power of a handled OFDM signal. For example, in the case where the electric power of one of 256 information-containing carriers is 1 mW, the RF power amplifier is designed to generate an RF signal having an electric power up to 2.5 W~5 W.

In other words, the RF power amplifier can generate a great-power RF signal without being saturated. Generally, a great-power RF amplifier tends to be expensive and large in size.

EP-A-0 719 001 discloses a system wherein, regarding the generation of a multi tone signal and the transmission thereof to a communication path, a digital multi tone signal is converted into an analog multi tone signal by a D/A converter.

At that time, a peak value of the digital multi tone signal is detected and the detected peak value is fed back to a VTC circuit to adjust the signal level to prevent the D/A converter from falling into a signal clipping state. An adjustment-resultant level (value) is stored in a register before being transmitted. A demodulator subjects the transmitted multi tone signal to a demodulation process by use of FFT, and the demodulation signal is adjusted on the basis of the transmitted adjustment-resultant value.

EP-A-0 594 358 discloses a system which generates transmission-purpose signals having different frequencies and being phase-locked to a reference signal fed from a reference frequency generator. The transmission-purpose signals are amplified by a common amplifier and fed to a common transmission path. Circuits for adjusting signal phases are interposed between the reference frequency generator and phase locking circuits to reduce a peak power or an average power of a combination-resultant transmission-purpose signal fed to the common amplifier.

US-A-5 381 449 discloses a QAM communication system for transmitting a plurality .of pilot signals and a plurality of QAM signals which result from modulation in accordance with signal points in a complex plane defined by a real axis and an imaginary axis. The positions of the pilot signals on the complex plane are adjusted to keep a peak power value small relative to the average transmitted power.

WO-A-94/06231 discloses a system wherein after the peak of an OFDM signal in a time domain which is generated by IFFT is limited, FFT is performed to implement conversion into a signal on a frequency domain. Signal frequencies caused by the peak limitation are reduced, and IFFT is performed again. Thereby, an OFDM signal is generated which has a limited peak.

It is an object of this invention to provide an improved apparatus for generating a frequency division multiplexed signal.

It is a further object of this invention to provide an improved decoding apparatus for a frequency division multiplexed signal.

The invention provides a frequency division multiplexed signal generating apparatus as defined in claim 1, a receiving apparatus according to claim 2, and methods according to claims 3 or 4.


BRIEF DESCRIPTION OF THE DRAWINGS


Fig. 1 is a block diagram of a signal transmitting apparatus according to a first embodiment of this invention.
Fig. 2 is a diagram of the frequency spectrum of an OFDM signal generated in the apparatus of Fig. 1.
Fig. 3 is a block diagram of a signal receiving apparatus according to the first embodiment of this invention.
Fig. 4 is a block diagram of an IFFT device in Fig. 1.
Fig. 5 is a signal flow diagram of fast Fourier transform (FFT).
Fig. 6 is a diagram of a circuit portion corresponding to a final stage of the signal flow diagram in Fig. 5.
Fig. 7 is a block diagram of a signal transmitting apparatus according to a second embodiment of this invention.
Fig. 8 is a diagram of the frequency spectrum of an OFDM signal generated in the apparatus of Fig. 7.
Fig. 9 is a diagram of a circuit portion in a third embodiment of this invention.
Fig. 10 is a block diagram of an OFDM signal generating apparatus according to a fourth embodiment of this invention.
Fig. 11 is a block diagram of an OFDM signal decoding apparatus according to a fifth embodiment of this invention.
Fig. 12 is a block diagram of an OFDM signal decoding apparatus according to a sixth embodiment of this invention.


DESCRIPTION OF THE PREFERRED EMBODIMENTS


A first aspect provides an embodiment of a frequency division multiplexed signal generating apparatus comprising a distributor separating digital information signals into plural groups; plural operation circuits converting the plural groups of the digital information signals into plural frequency division multiplexed signals, respectively; plural peak detecting circuits detecting peak powers of the plural frequency division multiplexed signals, respectively; polarity control means for detecting whether or not the detected peak powers are lower than a threshold power, and for, in cases where at least one of the detected peak powers is equal to or higher than the threshold power, controlling at least one of polarities of the plural frequency division multiplexed signals in a direction of canceling the peak power being equal to or higher than the given power; and an adding circuit combining the plural frequency division multiplexed signals into a final frequency division multiplexed signal.

A second aspect is based on the first aspect, and provides a frequency division multiplexed signal generating apparatus wherein the plural operation circuits comprise means for subjecting the plural groups of the digital information signals to inverse fast Fourier transform to generate the plural frequency division multiplexed signals, and the final frequency division multiplexed signal is an orthogonal frequency division multiplexed signal.

A third aspect provides a frequency division multiplexed signal generating apparatus comprising a distributor separating digital information signals into plural groups; plural operation circuits converting the plural groups of the digital information signals into plural frequency division multiplexed signals, respectively; plural peak detecting circuits detecting peak powers and peak-power time positions of the plural frequency division multiplexed signals, respectively, the peak detecting circuits outputting signals representing the detected peak powers and the detected peak-power time positions; polarity control means for detecting whether or not the detected peak powers are lower than a given power, and for, in cases where at least one of the detected peak powers is equal to or higher than the given power, controlling at least one of polarities of the plural frequency division multiplexed signals in response to the output signals of the peak detecting circuits in a direction of canceling the peak power being equal to or higher than the given power; and an adding circuit combining the plural frequency division multiplexed signals into a final frequency division multiplexed signal.

A fourth aspect is based on the third aspect, thereof, and provides a frequency division multiplexed signal generating apparatus wherein the plural operation circuits comprise means for subjecting the plural groups of the digital information signals to inverse fast Fourier transform to generate the plural frequency division multiplexed signals, and the final frequency division multiplexed signal is an orthogonal frequency division multiplexed signal.

A fifth aspect is based on the first aspect, and provides a frequency division multiplexed signal generating apparatus further comprising means for generating information of the controlling by the polarity control means, and means for converting the information into a polarity-control-information signal having a frequency within a frequency band of the plural frequency division multiplexed signals, the adding circuit combining the plural frequency division multiplexed signals and the polarity-control-information signal into the final frequency division multiplexed signal.

A sixth aspect is based on the third aspect, and provides a frequency division multiplexed signal generating apparatus further comprising means for generating information of the controlling by the polarity control means, and means for converting the information into a polarity-control-information signal having a frequency within a frequency band of the plural frequency division multiplexed signals, the adding circuit combining the plural frequency division multiplexed signals and the polarity-control-information signal into the final frequency division multiplexed signal.

A seventh aspect provides a frequency division multiplexed signal generating apparatus comprising a first operation circuit converting plural groups of digital information signals into plural groups of frequency division multiplexed signals, respectively; plural peak detecting circuits detecting peak powers and peak-power time positions of the groups of the frequency division multiplexed signals, respectively, the peak detecting circuits outputting signals representing the detected peak powers and the detected peak-power time positions; polarity control means for detecting whether or not the detected peak powers are lower than a given power, for, in cases where at least one of the detected peak powers is equal to or higher than the given power, controlling at least one of polarities of the frequency division multiplexed signals in response to the output signals of the peak detecting circuits in a direction of canceling the peak power being equal to or higher than the given power, and for generating information of said controlling; a second operation circuit converting the information generated by the polarity control means into a polarity-control-information signal having a frequency within a frequency band of the frequency division multiplexed signals; and an adding circuit combining the frequency division multiplexed signals and the polarity-control-information signal.

An eighth aspect is based on the seventh aspect, and provides a frequency division multiplexed signal generating apparatus wherein the first operation circuit sets a carrier hole in the frequency band of the frequency division multiplexed signals, and the second operation circuit comprises means for generating a carrier at a frequency position corresponding to the carrier hole and means for modulating the carrier into the polarity-control-information signal in accordance with the information generated by the polarity control means.

A ninth aspect is based on the eighth aspect, and provides a frequency division multiplexed signal generating apparatus wherein the carrier generated by the second operation circuit is synchronous with the frequency division multiplexed signals outputted from the first operation circuit, and the polarity-control-information signal is outputted from the second operation circuit at a timing same as a timing of outputting of the frequency division multiplexed signals from the first operation circuit.

A tenth aspect is based on the seventh aspect, and provides a frequency division multiplexed signal generating apparatus wherein the first operation circuit subjects the groups of the digital information signals to discrete Fourier transform to generate the frequency division multiplexed signals for a symbol interval, and the second operation circuit subjects the information generated by the polarity control means to discrete Fourier transform to generate the polarity-control-information signal for a symbol interval same as said symbol interval.

An eleventh aspect provides a decoding apparatus for a frequency division multiplexed signal containing main information and sub information, the sub information including information of polarity control, the apparatus comprising an operation circuit subjecting a frequency division multiplexed signal to Fourier transform to convert the frequency division multiplexed signal into a set of first decoding-resultant signals representing main-information pieces and at least one second decoding-resultant signal representing information of polarity control; and a polarity correction circuit controlling at least one of polarities of the first decoding-resultant signals in response to the polarity-control information represented by the second decoding-resultant signal.

A twelfth aspect is based on the eleventh aspect, and provides a decoding apparatus wherein the polarity correction circuit comprises a memory having a conversion table providing a relation between polarity-control resultant signals and the polarity-control information, and means for controlling at least one of polarities of the first decoding-resultant signals in response to the polarity-control information by referring to the conversion table.

A thirteenth aspect provides an apparatus comprising first means for subjecting information pieces to inverse fast Fourier transform to convert the information pieces to respective first conversion-resultant signals; second means for predicting a power of an assumed frequency division multiplexed signal from the first conversion-resultant signals, the assumed frequency division multiplexed signal originating from the first conversion-resultant signals; third means for controlling at least one of polarities of the first conversion-resultant signals in response to the power predicted by the second means to convert the first conversion-resultant signals into second conversion-resultant signals; and fourth means for generating an actual frequency division multiplexed signal in response to the second conversion-resultant signals.

A fourteenth aspect is based on the thirteenth aspect, and provides a apparatus further comprising fifth means for generating a signal representing information of said controlling by the third means.

A fifteenth aspect provides an apparatus for a frequency division multiplexed signal containing main information and sub information, the sub information including information of polarity control, the apparatus comprising first means for subjecting a frequency division multiplexed signal to Fourier transform to convert the frequency division multiplexed signal into a set of first decoding-resultant signals representing main-information pieces and at least one second decoding-resultant signal representing information of polarity control; and second means for controlling at least one of polarities of the first decoding-resultant signals in response to the polarity-control information represented by the second decoding-resultant signal.

First Embodiment

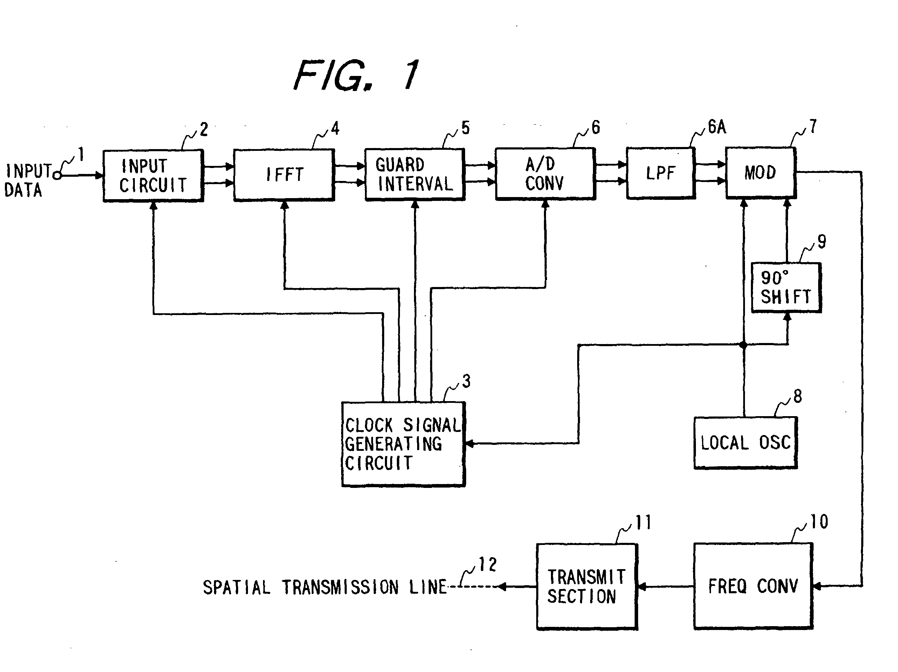

Fig. 1 shows a signal transmitting apparatus using orthogonal frequency division multiplexing (OFDM) according to a first embodiment of this invention. Digital data transmitted by the signal transmitting apparatus of Fig. 1 is equal to, for example, a compressed video signal and a compressed audio signal.

OFDM uses multiple carriers having an orthogonal relationship with each other. In OFDM data transmission, independent digital information pieces are transmitted by using multiple carriers respectively. Since the carriers are orthogonal with each other, the levels of the spectrums of carriers neighboring a given carrier are nullified at a point corresponding to the frequency of the given carrier.

An IFFT (inverse fast Fourier transform) circuit is used to generate a set of multiple orthogonal carriers. A baseband OFDM signal can be generated by executing inverse discrete Fourier transform (inverse DFT) using N complex numbers during a time interval T. Points of the inverse DFT correspond to modulation signal outputs respectively.

Basic specifications of the signal transmitting apparatus of Fig. 1 are as follows. The central carrier frequency in an RF band is equal to 100 MHz. The number of carriers for data transmission is equal to 248. The modulation is of the 256-QAM OFDM type. The number of used carriers is equal to 257. The used carriers are spaced at equal frequency intervals. The transmission band width is equal to 100 kHz. The used band width is equal to 99 kHz. The transmission data rate is equal to about 750 kbps. The guard interval is equal to 60 $\mu$sec.

With reference to Fig. 1, a digital information signal in the form of a bit stream is fed via an input terminal 1 to an input circuit 2. The digital information signal results from, for example. compressing an audio information signal or a video information signal according to an MPEG encoding process. The input circuit 2 adds an error correction code to the digital information signal in response to a clock signal fed from a clock signal generating circuit 3.

The input circuit 2 subjects the resultant digital information signal to serial-to-parallel (S/P) conversion in response to the clock signal fed from the clock signal generating circuit 3. During the S/P conversion, the digital information signal is divided into blocks corresponding to modulating signals for 256 QAM. The input circuit 2 outputs the modulating signals. According to 256 QAM, 16 different levels are defined in an amplitude direction while 16 different levels are defined in an angle direction. In addition, 256 different digital states are assigned to the 256 levels (16 levels multiplied by 16 levels) respectively.

As previously described, 248 carriers among 257 carriers are used for transmitting data (information). The 9 remaining carriers are used for transmitting calibration signals and other helper signals (other auxiliary signals).

The input circuit 2 outputs 248-byte digital data for every 1-symbol interval. In more detail, the input circuit 2 outputs a first set of 248 parallel digital signals each having 4 bits, and a second set of 248 parallel digital signals each having 4 bits for every 1-symbol interval. The first set and the second set correspond to a real part and an imaginary part (an I signal and a Q signal) respectively.

The 248 output signals from the input circuit 2 in each of the real part and the imaginary part are fed to an IFFT (inverse fast Fourier transform) device 4. The IFFT device 4 operates in response to a clock signal fed from the clock signal generating circuit 3. The IFFT device 4 is of the type capable of processing N parallel signals, where N denotes a natural number equal to 256 which is defined as a period. The IFFT device 4 has a set of 256 input terminals for the real part and also a set of 256 input terminals for the imaginary part. The 248 output signals from the input circuit 2 in the real part are applied to 248 IFFT-device input terminals among the 256 input terminals for the real part, respectively. The 248 output signals from the input circuit 2 in the imaginary part are applied to 248 IFFT-device input terminals among the 256 input terminals for the imaginary part, respectively. Regarding each of the real part and the imaginary part, a major portion of the operation of the IFFT device 4 corresponds to subjecting 248 carriers to 256 QAM responsive to the 248 output signals from the input circuit 2 respectively. Regarding the 248 output signals from the input circuit 2, the IFFT device 4 generates the 248 modulation-resultant signals in each of the real part and the imaginary part. The IFFT device 4 combines the 248 modulation-resultant signals and other modulation-resultant signals of the real part into a multiplexing-resultant signal corresponding to the real part. The IFFT device 4 outputs the multiplexing-resultant signal corresponding to the real part. Also, the IFFT device 4 combines the 248 modulation-resultant signals and other modulation-resultant signals of the imaginary part into a multiplexing-resultant signal corresponding to the imaginary part. The IFFT device 4 outputs the multiplexing-resultant signal corresponding to the imaginary part.

For example, information represented by a pair of signals applied to the 0-th input terminals of the IFFT device 4 for the real part and the imaginary part is assigned to a central-frequency carrier. For example, information represented by a pair of signals applied to the 127-th input terminals of the IFFT device 4 for the real part and the imaginary part is assigned to edge-frequency carriers corresponding to a Nyquist frequency.

The output signals of the IFFT device 4 are fed to a guard interval setting circuit 5. The guard interval setting circuit 5 provides a guard interval of a given length for every symbol of the output signals of the IFFT device 4. The guard intervals are designed to reduce multipath distortions caused by a transmission line. The guard interval setting circuit 5 operates in response to a clock signal fed from the clock signal generating circuit 3.

Output signals of the guard interval setting circuit 5 are fed to a D/A converter 6, being converted into corresponding analog signals thereby. The D/A converter 6 operates in response to a clock signal fed from the clock signal generating circuit 3. The D/A converter 6 outputs the resultant analog signals to an LPF (a low pass filter) 6A. Only components of the output signals of the D/A converter 6 in a desired frequency band are passed through the LPF 6A.

Output signals of the LPF 6A which correspond to the real part and the imaginary part are fed to a quadrature modulator 7 as baseband signals. A local oscillator 8 outputs a given-frequency signal, for example, a 10.7-MHz signal, to the quadrature modulator 7. The frequency of the output signal of the local oscillator 8 corresponds to a given intermediate frequency (IF). The local oscillator 8 also outputs the given-frequency signal to a 90° phase shifter 9. The device 9 shifts the phase of the given-frequency signal by 90°, and outputs the phase-shift resultant signal to the quadrature modulator 7. In this way, a pair of given-frequency signals having a quadrature relation are fed to the quadrature modulator 7. In the quadrature modulator 7, the quadrature given-frequency signals are modulated in accordance with the baseband signals outputted from the LPF 6A so that the baseband signals are converted into an IF OFDM (intermediate frequency OFDM) signal. The IF OFDM signal has multiple IF orthogonal carriers which are modulated as indications of the output baseband signals of the LPF 6.

The IF OFDM signal is outputted from the quadrature modulator 7 to a frequency converter 10. The IF OFDM signal is changed by the frequency converter 10 into an RF OFDM (radio frequency OFDM) signal in a desired frequency band for transmission. The central frequency of the RF OFDM signal is equal to 100 MHz. The RF OFDM signal has multiple RF orthogonal carriers which are modulated as indications of the output baseband signals of the LPF 6A respectively. The frequency converter 10 includes a local oscillator and a mixer. In the frequency converter 10, the IF OFDM signal and the output signal of the local oscillator are mixed by the mixer so that the IF OFDM signal is converted into the RF OFDM signal.

The RF OFDM signal is fed to a transmitting section 11 from the frequency converter 10. The transmitting section 11 includes a linear power amplifier and a transmission antenna. The RF OFDM signal is fed via the linear power amplifier to the transmission antenna, being radiated by the transmission antenna into a transmission line (the air) 12.

The output signal of the local oscillator 8 is also fed to the clock signal generating circuit 3. The circuit 3 generates clock signals in response to the output signal of the local oscillator 8 by frequency dividing processes, and outputs the generated clock signals to the input circuit 2, the IFFT device 4, the guard interval setting circuit 5, and the D/A converter 6 as operation timing control signals respectively.

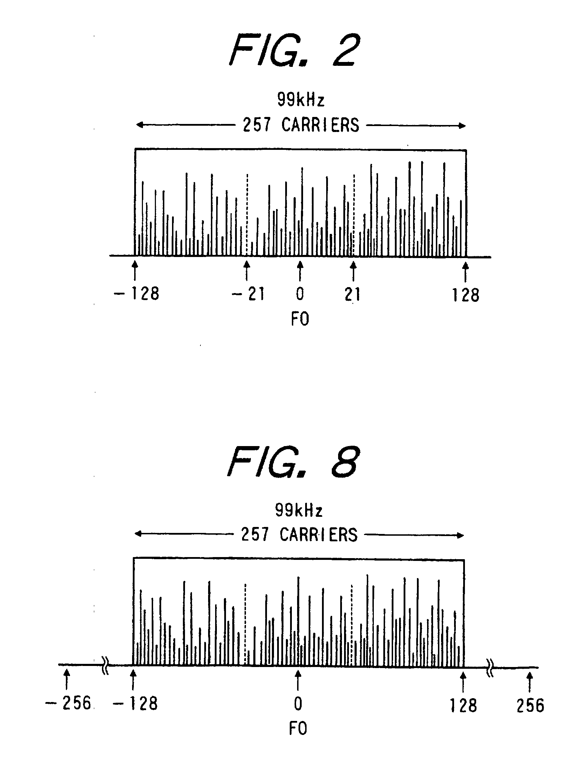

Fig. 2 shows an example of the frequency spectrum of the IF OFDM signal outputted from the quadrature modulator 7. Carries of the IF OFDM signal are spaced at equal frequency intervals which correspond to a symbol frequency. With reference to Fig. 2, a carrier having a frequency equal to a central IF frequency (that is, 10.7 MHz) F0 is referred to as a 0-th carrier. Carriers extending in a frequency upper side (a right-hand side) of the 0-th carrier are sequentially referred to as a 1-st carrier, a 2-nd carrier, a 3-rd carrier, ⋯, and a 128-th carrier respectively. Carriers extending in a frequency lower side (a left-hand side) of the 0-th carrier are sequentially referred to as a -1-st carrier, a -2-nd carrier, a -3-rd carrier, ⋯, and a -128-th carrier respectively. In this way, the different order numbers are sequentially given to the carriers respectively.

With reference to Fig. 2, the central frequency F0 of the IF OFDM signal is equal to 10.7 MHz. The IF OFDM signal has 257 carriers in a frequency band of 99 kHz. Each of 248 carriers among the 257 carriers undergoes 256 QAM responsive to an 8-bit information piece. The 9 remaining carriers including the central-frequency carrier are used for transmitting calibration signals and other helper signals (other auxiliary signals).

With reference to Fig. 2, carriers in an upper side of the central-frequency carrier relate to signals applied to the first real-part and imaginary-part input terminals to the 127-th real-part and imaginary-part input terminals of the IFFT device 4 respectively. Carriers in a lower side of the central-frequency carrier relate to signals applied to the 127-th real-part and imaginary-part input terminals to the 255-th real-part and imaginary-part input terminals of the IFFT device 4 respectively. The 128-th carrier and the -128-th carrier correspond to the Nyquist frequency. A pair of signals applied to the 127-th input terminals of the IFFT device 4 for the real part and the imaginary part is assigned to the 128-th carrier and the -128-th carrier. Thus, a pair of signals applied to the 127-th input terminals of the IFFT device 4 for the real part and the imaginary part is transmitted by both the 128-th carrier and the -128-th carrier. Specifically, fixed-voltage signals or fixed-logic-state signals are applied to the 127-th input terminals of the IFFT device 4 for the real part and the imaginary part to generate a pilot signal which is transmitted by the 128-th carrier and the -128-th carrier.

A description will now be given of a symbol interval "ta" related to the guard interval setting circuit 5. In the case where the used frequency band is equal to 99 kHz and the period N is given as N=256, an effective symbol frequency "fs" and an effective symbol period "ts" are expressed as follows.

$$fs = 99,000/256 = 387 \text{ Hz}$$

$$ts = 1/fs = 2,586 \text{ } \mu\text{sec}$$

In the case where the guard interval "gi" for reducing multipath effects is set to 60 $\mu$sec, the symbol interval "ta" and the symbol frequency "fa" are given as follows.

$$ta = ts + gi = 2586 + 60 = 2646 \text{ } \mu\text{sec}$$

$$fa = 1/ta = 378 \text{ Hz}$$

In this embodiment, during every 1-symbol period, 248 parallel digital data pieces each having 8 bits (4 bits plus 4 bits) are transmitted together with 248 carriers. Accordingly, the transmission data rate corresponds to 248 bytes per symbol interval. Thus, the transmission data rate per second is approximately equal to 750 kilo-bits.

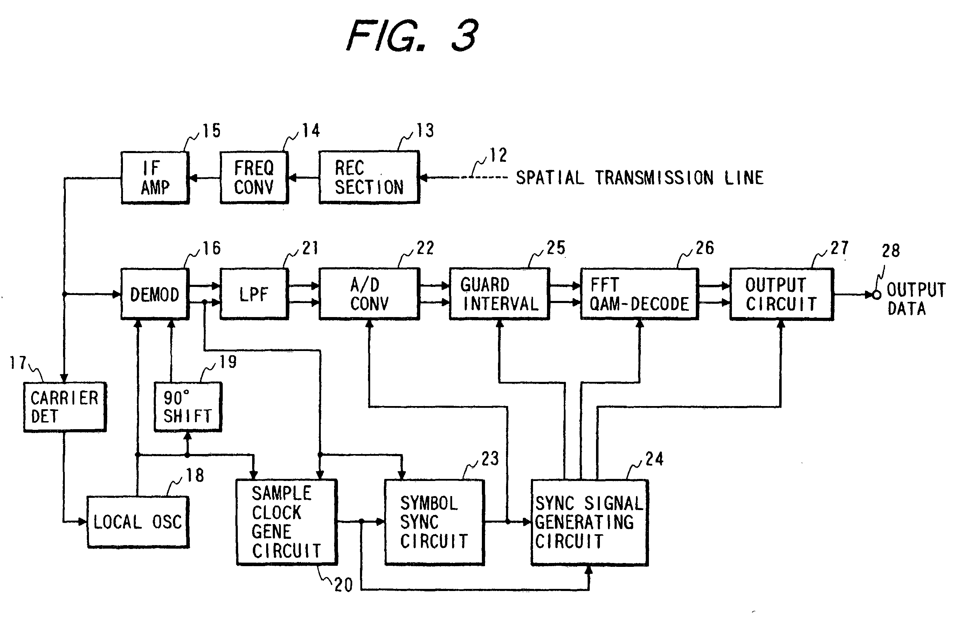

Fig. 3 shows a signal receiving apparatus using orthogonal frequency division multiplexing (OFDM) according to the first embodiment of this invention. The signal receiving apparatus of Fig. 3 is able to accept an RF OFDM signal transmitted by the signal transmitting apparatus of Fig. 1.

With reference to Fig. 3, a receiving section 13 includes a reception antenna which catches an RF OFDM signal transmitted from, for example, the signal transmitting apparatus of Fig. 1 via the transmission line (the air) 12. The central frequency of the RF OFDM signal is equal to 100 MHz. The RF OFDM signal has multiple RF orthogonal carriers which are modulated in accordance with transmitted baseband signals respectively. The receiving section 13 includes an RF amplifier which enlarges the caught RF OFDM signal.

An output RF OFDM signal from the RF amplifier in the receiving section 13 is fed to a frequency converter 14, being converted into a corresponding IF OFDM signal thereby. The central frequency of the IF OFDM signal is equal to 10.7 MHz. The IF OFDM signal has multiple IF orthogonal carriers which are modulated in accordance with transmitted baseband signals respectively. The frequency converter 14 includes a local oscillator and a mixer. In the frequency converter 14, the RF OFDM signal and the output signal of the local oscillator are mixed by the mixer so that the RF OFDM signal is converted into the IF OFDM signal.

The IF OFDM signal is fed from the frequency converter 14 to an IF amplifier 15, being enlarged to a desired level thereby. The output IF OFDM signal from the IF amplifier 15 is fed to a quadrature demodulator 16 and a carrier detecting circuit 17.

The carrier detecting circuit 17 includes a PLL (phase locked loop) circuit having a combination of a phase comparator (a multiplier), an LPF, a VCO (voltage-controlled oscillator), and a 1/4 frequency divider. The PLL circuit recovers the carriers in the IF OFDM signal. An output signal of the carrier detecting circuit 17, which corresponds to the recovered carriers, is fed to a local oscillator 18. The local oscillator 18 is designed to extract the central-frequency carrier among the carriers in the IF OFDM signal with a negligible phase error. The local oscillator 18 outputs a signal corresponding to the extracted central-frequency carrier. Thus, the local oscillator 18 reproduces a local oscillator signal used in a transmitter side.

In this embodiment, the IF OFDM signal (or the RF OFDM signal) is based on the information-transmitting carriers with frequencies which are spaced at intervals of 378 Hz equal to the symbol frequency. The frequencies of the information carriers neighboring the central carrier are spaced from the frequency of the central carrier by only 378 Hz. Accordingly, it is preferable that the extraction of the central carrier is executed by a high-selectivity circuit.

The local oscillator 18 uses a high-selectivity circuit. Specifically, the local oscillator 18 includes a PLL circuit for extracting the central carrier from the carriers outputted by the carrier detecting circuit 17. A voltage-controlled oscillator (VCO) in the PLL circuit in the local oscillator 18 uses a voltage-controlled crystal oscillator (VCXO) which can oscillate at a frequency variable in a given small range (for example, ±200 Hz) around the frequency of the central carrier. In addition, an LPF in the PLL circuit has a cut-off frequency adequately low with respect to 378 Hz.

The output signal of the local oscillator 18 is fed to the quadrature demodulator 16. The output signal of the local oscillator 18 is also fed to a 90° phase shifter 19. The device 19 shifts the phase of the output signal of the local oscillator 18 by 90°. The phase-shift resultant signal is outputted from the device 19 to the quadrature demodulator 16. In this way, a pair of reproduced local oscillator signals having a quadrature relation are fed to the quadrature demodulator 16. In response to the quadrature signals, the IF OFDM signal is demodulated by the quadrature demodulator 16 into baseband signals corresponding to a real part and an imaginary part (an I signal and a Q signal) respectively.

Output signals from the quadrature demodulator 16 are fed to an LPF 21. Only components of the output signals of the quadrature demodulator 16, which occupy a desired frequency band, are passed through the LPF 21. Output signals of the LPF 21 which have analog forms are fed to an A/D converter 22. The output signals of the LPF 21 are subjected to sampling processes and are converted by the A/D converter 22 into corresponding digital signals. The A/D converter 22 operates in response to a sample clock signal fed from a sample clock signal generating circuit 20.

One of the output signals of the quadrature demodulator 16 is fed to the sample clock signal generating circuit 20. The output signal of the local oscillator 18 is fed to the sample clock signal generating circuit 20. The sample clock signal generating circuit 20 includes a PLL circuit phase-locked with respect to a pilot signal in the output signal of the quadrature demodulator 16. It should be noted that the pilot signal is transmitted by specified carriers as a continuous signal during every symbol interval containing a guard interval. The sample clock signal generating circuit 20 derives pilot signal frequency information, and reproduces the pilot signal.

In a transmitter side, the frequency of the pilot signal is set to correspond to a given ratio between integers with respect to the frequency of the sample clock signal. The sample clock signal generating circuit 20 includes a frequency multiplier operating on the reproduced pilot signal at a multiplying factor corresponding to the above-indicated frequency ratio. A sample clock signal (a clock sync signal) is recovered through the frequency multiplication.

The output signals of the A/D converter 22 are fed to a guard interval processing circuit 25. The guard interval processing circuit 25 extracts time-portions of the output signals of the A/D converter 22 which occupy every effective symbol interval. The guard interval processing circuit 25 operates in response to a clock signal fed from a clock signal generating circuit 24. Output signals of the guard interval processing circuit 25 are fed to an FFT QAM (fast Fourier transform, quadrature amplitude modulation) decoding circuit 26.

The FFT QAM decoding circuit 26 subjects the output signals of the guard interval processing circuit 25 to processing which corresponds to complex fast Fourier transform. The FFT QAM decoding circuit 26 operates in response to a clock signal fed from the clock signal generating circuit 24. According to the complex fast Fourier transform processing, the FFT QAM decoding circuit 26 derives the levels of baseband carriers in the real-part signal and the imaginary-part signal outputted from the guard interval processing circuit 25. In the FFT QAM decoding circuit 26, the derived real-part levels and the derived imaginary-part levels are compared with reference demodulation output levels so that the states of transmitted digital signals are determined. In this way, the transmitted digital information is recovered.

Output signals of the FFT QAM decoding circuit 26 which correspond to the recovered digital signals are fed to an output circuit 27. The output signals of the FFT QAM decoding circuit 26 are subjected by the output circuit 27 to parallel-to-serial (P/S) conversion, being rearranged and combined into a serial-form digital signal. The output circuit 27 operates in response to a clock signal fed from the clock signal generating circuit 24. The serial-form digital signal is transmitted from the output circuit 27 to an external device (not shown) via an output terminal 28.

One of the output signals of the quadrature demodulator 16 is fed to a symbol sync signal generating circuit 23. The sample clock signal is fed from the sample clock signal generating circuit 20 to the symbol sync signal generating circuit 23. The symbol sync signal generating circuit 23 detects conditions of the phase of the pilot signal in response to the sample clock signal, thereby reproducing a symbol sync signal.

The clock signal generating circuit 24 receives the sample clock signal from the sample clock signal generating circuit 20. The clock signal generating circuit 24 receives the symbol sync signal from the symbol sync signal generating circuit 23. The clock signal generating circuit 24 produces clock signals in response to the output signals of the sample clock signal generating circuit 20 and the symbol sync signal generating circuit 23. The clock signal generating circuit 24 feeds the produced clock signals to the guard interval processing circuit 25, the FFT QAM decoding circuit 26, and the output circuit 27 as operation timing control signals.

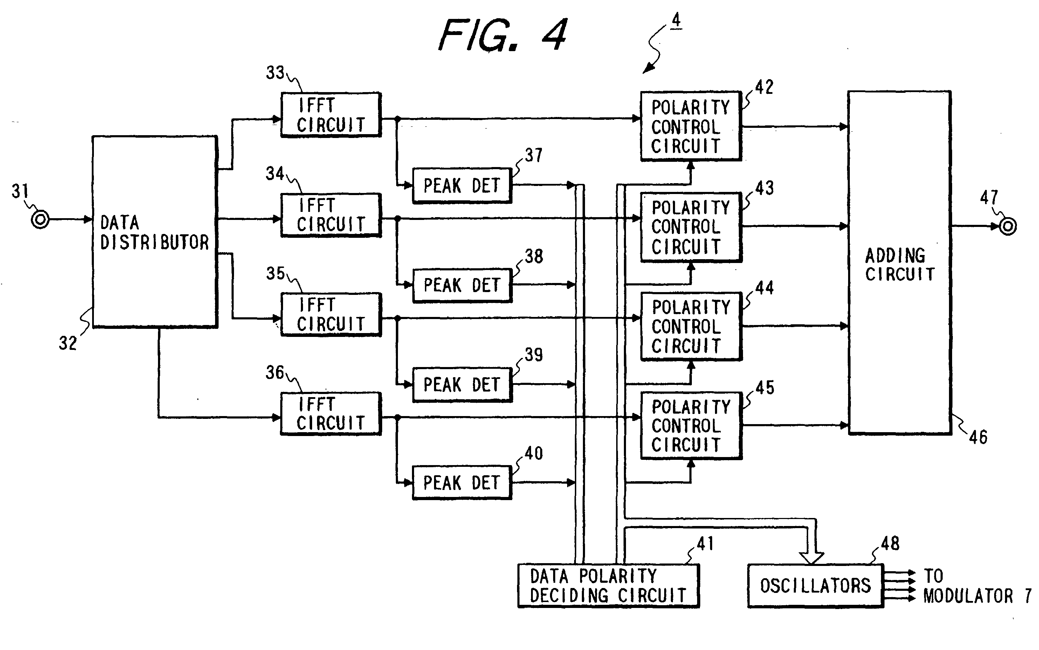

As shown in Fig. 4, the IFFT device 4 in the signal transmitting apparatus includes a distributor 32, IFFT circuits 33, 34, 35, and 36, peak detectors 37, 38, 39, and 40, a data polarity deciding circuit 41, polarity control circuits 42, 43, 44, and 45, and an adding circuit 46. The IFFT device 4 has an input terminal 31 following the input circuit 2 (see Fig. 1). The input terminal 31 is connected to an input side of the distributor 32. The distributor 32 has four output sides followed by the IFFT circuits 33, 34, 35, and 36 respectively. The output terminals of the IFFT circuits 33, 34, 35, and 36 are connected to the input terminals of the peak detectors 37, 38, 39, and 40 respectively. Also, the output terminals of the IFFT circuits 33, 34, 35, and 36 are connected to the input terminals of the polarity control circuits 42, 43, 44, and 45 respectively. The output terminals of the peak detectors 37, 38, 39, and 40 are connected to the data polarity deciding circuit 41. The polarity control circuits 42, 43, 44, and 45 have control terminals connected to the data polarity deciding circuit 41. The polarity control circuits 42, 43, 44, and 45 are followed by the adding circuit 46. The adding circuit 46 is followed by an output terminal 47 leading to the guard interval setting circuit 5 (see Fig. 1).

As previously described, the input circuit 2 (see Fig. 1) outputs 248-byte digital data for every 1-symbol interval. In more detail, the input circuit 2 outputs a first set of 248 parallel digital signals each having 4 bits, and a second set of 248 parallel digital signals each having 4 bits for every 1-symbol interval. The first set and the second set correspond to a real part and an imaginary part (an I signal and a Q signal) respectively. For every 1-symbol interval, 256-byte digital data including the 248-byte digital data outputted from the input circuit 2 is fed to the distributor 32 via the input terminal 31. For every 1-symbol interval, the distributor 32 divides the 256-byte digital data into four 64-byte digital signals. Each of the four 64-byte digital signals is composed of a real-part set of 64 parallel digital signals each having 4 bits, and an imaginary-part set of 64 parallel digital signals each having 4 bits. The distributor 32 outputs the four 64-byte digital signals to the IFFT circuits 33, 34, 35, and 36 respectively.

Each of the IFFT circuits 33, 34, 35, and 36 is of the type capable of processing N parallel signals, where N denotes a natural number equal to 256 which is defined as a period. Each of the IFFT circuits 33, 34, 35, and 36 has a set of 256 input terminals for the real part and also a set of 256 input terminals for the imaginary part. Regarding each of the IFFT circuits 33, 34, 35, and 36, the 64 parallel digital signals in the real part are applied to 64 IFFT-circuit input terminals among the 256 input terminals for the real part, respectively. Similarly, the 64 parallel digital signals in the imaginary part are applied to 64 IFFT-circuit input terminals among the 256 input terminals for the imaginary part, respectively. The 64 used input terminals of the IFFT circuit 33 in each of the real part and the imaginary part are chosen to correspond to $\pm4m$-th carriers, where "m" denotes natural numbers equal to 0, 1, 2, $\cdots$, 31. The 64 used input terminals of the IFFT circuit 34 in each of the real part and the imaginary part are chosen to correspond to ($\pm4m+1$)-th carriers. The 64 used input terminals of the IFFT circuit 35 in each of the real part and the imaginary part are chosen to correspond to ($\pm4m+2$)-th carriers. The 64 used input terminals of the IFFT circuit 36 in each of the real part and the imaginary part are chosen to correspond to ($\pm4m+3$)-th carriers.

Thus, the 256 carriers are separated into four groups in a comb-like distribution manner. Each of the four groups has 64 carriers. The IFFT circuits 33, 34, 35, and 36 relate to the four carrier groups respectively.

Regarding each of the real part and the imaginary part, the operation of each of the IFFT circuits 33, 34, 35, and 36 corresponds to subjecting 64 carriers to 256 QAM responsive to the 64 parallel digital signals respectively. Regarding the 64 parallel digital signals, each of the IFFT circuits 33, 34, 35, and 36 generates the 64 modulation-resultant signals in each of the real part and the imaginary part. Each of the IFFT circuits 33. 34, 35, and 36 combines the 64 modulation-resultant signals of the real part into a multiplexing-resultant signal corresponding to the real part. Each of the IFFT circuits 33, 34, 35, and 36 outputs the multiplexing-resultant signal corresponding to the real part. Also, each of the IFFT circuits 33, 34, 35, and 36 combines the 64 modulation-resultant signals of the imaginary part into a multiplexing-resultant signal corresponding to the imaginary part. Each of the IFFT circuits 33, 34, 35, and 36 outputs the multiplexing-resultant signal corresponding to the imaginary part.

The peak detector 37 receives the real-part output signal and the imaginary-part output signal of the IFFT circuit 33. The device 37 detects an instantaneous peak power of the resultant of the real-part output signal and the imaginary-part output signal of the IFFT circuit 33. In more detail, the device 37 detects an instantaneous peak voltage-corresponding value of the resultant of the real-part output signal and the imaginary-part output signal of the IFFT circuit 33 as an indication of the instantaneous peak power thereof. It should be noted that a peak voltage-corresponding value of the resultant of the real-part output signal and the imaginary-part output signal of the IFFT circuit 33 relates to a peak power of a corresponding RF signal radiated into the air. Also, the device 37 detects the polarity of the resultant of the real-part output signal and the imaginary-part output signal of the IFFT circuit 33 which occurs at the moment of the occurrence of the detected peak power. Further, the device 37 detects the moment or time position of the occurrence of the detected peak power with respect to the related IFFT process. The peak detector 37 feeds the data polarity deciding circuit 41 with information of the detected peak power, the detected polarity, and the detected time position of the peak power.

The peak detector 38 receives the real-part output signal and the imaginary-part output signal of the IFFT circuit 34. The device 38 detects an instantaneous peak power of the resultant of the real-part output signal and the imaginary-part output signal of the IFFT circuit 34. In more detail, the device 38 detects an instantaneous peak voltage-corresponding value of the resultant of the real-part output signal and the imaginary-part output signal of the IFFT circuit 34 as an indication of the instantaneous peak power thereof. It should be noted that a peak voltage-corresponding value of the resultant of the real-part output signal and the imaginary-part output signal of the IFFT circuit 34 relates to a peak power of a corresponding RF signal radiated into the air. Also, the device 38 detects the polarity of the resultant of the real-part output signal and the imaginary-part output signal of the IFFT circuit 34 which occurs at the moment of the occurrence of the detected peak power. Further, the device 38 detects the moment or time position of the occurrence of the detected peak power with respect to the related IFFT process. The peak detector 38 feeds the data polarity deciding circuit 41 with information of the detected peak power, the detected polarity, and the detected time position of the peak power.

The peak detector 39 receives the real-part output signal and the imaginary-part output signal of the IFFT circuit 35. The device 39 detects an instantaneous peak power of the resultant of the real-part output signal and the imaginary-part output signal of the IFFT circuit 35. In more detail, the device 39 detects an instantaneous peak voltage-corresponding value of the resultant of the real-part output signal and the imaginary-part output signal of the IFFT circuit 35 as an indication of the instantaneous peak power thereof. It should be noted that a peak voltage-corresponding value of the resultant of the real-part output signal and the imaginary-part output signal of the IFFT circuit 35 relates to a peak power of a corresponding RF signal radiated into the air. Also, the device 39 detects the polarity of the resultant of the real-part output signal and the imaginary-part output signal of the IFFT circuit 35 which occurs at the moment of the occurrence of the detected peak power. Further, the device 39 detects the moment or time position of the occurrence of the detected peak power with respect to the related IFFT process. The peak detector 39 feeds the data polarity deciding circuit 41 with information of the detected peak power, the detected polarity, and the detected time position of the peak power.

The peak detector 40 receives the real-part output signal and the imaginary-part output signal of the IFFT circuit 36. The device 40 detects an instantaneous peak power of the resultant of the real-part output signal and the imaginary-part output signal of the IFFT circuit 36. In more detail, the device 40 detects an instantaneous peak voltage-corresponding value of the resultant of the real-part output signal and the imaginary-part output signal of the IFFT circuit 36 as an indication of the instantaneous peak power thereof. It should be noted that a peak voltage-corresponding value of the resultant of the real-part output signal and the imaginary-part output signal of the IFFT circuit 36 relates to a peak power of a corresponding RF signal radiated into the air. Also, the device 40 detects the polarity of the resultant of the real-part output signal and the imaginary-part output signal of the IFFT circuit 36 which occurs at the moment of the occurrence of the detected peak power. Further, the device 40 detects the moment or time position of the occurrence of the detected peak power with respect to the related IFFT process. The peak detector 40 feeds the data polarity deciding circuit 41 with information of the detected peak power, the detected polarity, and the detected time position of the peak power.

The polarity control circuit 42 receives the real-part output signal and the imaginary-part output signal of the IFFT circuit 33. The polarity control circuit 42 selectively changes or inverts the polarities of the real-part output signal and the imaginary-part output signal of the IFFT circuit 33 in response to a control signal fed from the data polarity deciding circuit 41. The polarity control circuit 42 outputs the resultant real-part signal and the resultant imaginary-part signal to the adding circuit 46.

The polarity control circuit 43 receives the real-part output signal and the imaginary-part output signal of the IFFT circuit 34. The polarity control circuit 43 selectively changes or inverts the polarities of the real-part output signal and the imaginary-part output signal of the IFFT circuit 34 in response to a control signal fed from the data polarity deciding circuit 41. The polarity control circuit 43 outputs the resultant real-part signal and the resultant imaginary-part signal to the adding circuit 46.

The polarity control circuit 44 receives the real-part output signal and the imaginary-part output signal of the IFFT circuit 35. The polarity control circuit 44 selectively changes or inverts the polarities of the real-part output signal and the imaginary-part output signal of the IFFT circuit 35 in response to a control signal fed from the data polarity deciding circuit 41. The polarity control circuit 44 outputs the resultant real-part signal and the resultant imaginary-part signal to the adding circuit 46.

The polarity control circuit 45 receives the real-part output signal and the imaginary-part output signal of the IFFT circuit 36. The polarity control circuit 45 selectively changes or inverts the polarities of the real-part output signal and the imaginary-part output signal of the IFFT circuit 36 in response to a control signal fed from the data polarity deciding circuit 41. The polarity control circuit 45 outputs the resultant real-part signal and the resultant imaginary-part signal to the adding circuit 46.

The adding circuit 46 combines the real-part output signals of the polarity control circuits 42, 43, 44, and 45 into a multiplexing-resultant signal corresponding to the real part. The adding circuit 46 combines the imaginary-part output signals of the polarity control circuits 42, 43, 44, and 45 into a multiplexing-resultant signal corresponding to the imaginary part. The multiplexing-resultant signals corresponding to the real part and the imaginary part are transmitted from the adding circuit 46 to the guard interval setting circuit 5 via the output terminal 47.

The data polarity deciding circuit 41 estimates or predicts the instantaneous peak power of the OFDM signal (the IF OFDM signal or the RF OFDM signal) in response to the information of the detected peak powers, the detected polarities, and the detected time positions of the peak powers which is fed from the peak detectors 37, 38, 39, and 40. The data polarity deciding circuit 41 compares the estimated peak power with a predetermined reference power. The data polarity deciding circuit 41 generates the control signals for the polarity control circuits 42, 43, 44, and 45 in response to the result of the comparison between the estimated peak power and the reference power. Also, the data polarity deciding circuit 41 determines the states of the control signals for the polarity control circuits 42, 43, 44, and 45 in response to the information of the detected polarities which is fed from the peak detectors 37, 38, 39, and 40. The data polarity deciding circuit 41 outputs the generated control signals to the polarity control circuits 42, 43, 44, and 45 respectively.

The control signals outputted from the data polarity deciding circuit 41 to the polarity control circuits 42, 43, 44, and 45 are designed to enable the following processes. In the case where the estimated peak power is lower than the reference power, the polarity control circuits 42, 43, 44, and 45 do not change the polarities of the real-part output signals and the imaginary-part output signals of the IFFT circuits 33, 34, 35, and 36. Accordingly, in this case, the real-part output signals and the imaginary-part output signals of the IFFT circuits 33, 34, 35, and 36 pass through the polarity control circuits 42, 43, 44, and 45 without undergoing any polarity changes. In the case where the estimated peak power is equal to or higher than the reference power, one, two, or three of the polarity control circuits 42, 43, 44, and 45 change (invert) the polarities of the real-part output signals and the imaginary-part output signals of the related IFFT circuits while the other polarity control circuit or circuits do not change the polarities of the real-part output signals and the imaginary-part output signals of the related IFFT circuits. Accordingly, in this case, the real-part output signals and the imaginary-part output signals of one, two, or three of the IFFT circuits 33, 34, 35, and 36 pass through the related polarity control circuits with undergoing polarity changes (polarity inversions) while the real-part output signals and the imaginary-part output signals of the other IFFT circuit or circuits pass through the related polarity control circuits without undergoing any polarity changes. The execution of the polarity changes prevents the actual instantaneous peak power of the OFDM signal (the IF OFDM signal or the RF OFDM signal) from exceeding the reference power.

For example, in the case where the estimated peak power is equal to or higher than the reference power, detection is made as to which of the real-part output signals and the imaginary-part output signals of the IFFT circuits 33, 34, 35, and 36 are a predominant cause of the estimated peak power (a predominant component of the estimated peak power). One of the polarity control circuits 42, 43, 44, and 45, which relates to the predominant-cause IFFT-circuit output signals, does not change the predominant-cause IFFT-circuit output signals. The other polarity control circuits change or invert the polarities of the real-part output signal and the imaginary-part output signal of the related IFFT circuits.

Information of the polarity changes is transmitted by four specified carriers selected out of the 257 carriers. A fixed signal corresponding to a voltage of "0" is applied to a pair of a real-part input terminal and an imaginary-part input terminal of the IFFT circuit 33 which correspond to first one of the four specified carriers. The application of the fixed signal of "0" to the IFFT circuit 33 nullifies the first specified carrier in respect of the output signals of the IFFT circuit 33. The nullification of the first specified carrier provides a corresponding carrier hole. A fixed signal corresponding to a voltage of "0" is applied to a pair of a real-part input terminal and an imaginary-part input terminal of the IFFT circuit 34 which correspond to second one of the four specified carriers. The application of the fixed signal of "0" to the IFFT circuit 34 nullifies the second specified carrier in respect of the output signals of the IFFT circuit 34. The nullification of the second specified carrier provides a corresponding carrier hole. A fixed signal corresponding to a voltage of "0" is applied to a pair of a real-part input terminal and an imaginary-part input terminal of the IFFT circuit 35 which correspond to third one of the four specified carriers. The application of the fixed signal of "0" to the IFFT circuit 35 nullifies the third specified carrier in respect of the output signals of the IFFT circuit 35. The nullification of the third specified carrier provides a corresponding carrier hole. A fixed signal corresponding to a voltage of "0" is applied to a pair of a real-part input terminal and an imaginary-part input terminal of the IFFT circuit 36 which correspond to fourth one of the four specified carriers. The application of the fixed signal of "0" to the IFFT circuit 36 nullifies the fourth specified carrier in respect of the output signals of the IFFT circuit 36. The nullification of the fourth specified carrier provides a corresponding carrier hole. In this way, components corresponding to the four specified carriers are removed from the output signals of the IFFT circuits 33, 34, 35, and 36.

As shown in Fig. 4, the IFFT device 4 includes oscillators 48 for generating and outputting signals corresponding to the four specified carriers respectively. The oscillators 48 have control terminals which are connected to the data polarity deciding circuit 41. The control signals for the polarity control circuits 42, 43, 44, and 45 are also fed from the data polarity deciding circuit 41 to the oscillators 48 corresponding to the first, second, third, and fourth specified carriers respectively. The oscillators 48 are selectively activated and deactivated in response to the control signals fed from the data polarity deciding circuit 41. The output terminals of the oscillators 48 are connected to the quadrature modulator 7 (see Fig. 1). When none of the polarity control circuits 42, 43, 44, and 45 executes the polarity changes, all the oscillators 48 are deactivated so that the oscillators 48 do not output effective signals corresponding to the four specified carriers. Accordingly, in this case, the four specified carriers are absent from the OFDM signal (the IF OFDM signal or the RF OFDM signal). When one of the polarity control circuits 42, 43, 44, and 45 executes the polarity changes, the corresponding oscillator 48 is activated so that the active oscillator 48 outputs an effective signal corresponding to one of the four specified carriers. The effective signal corresponding to one of the four specified carriers is fed from the active oscillator 48 to the quadrature modulator 7 so that an effective component corresponding to one of the specified carriers is present in the output signal of the quadrature modulator 7. Accordingly, in this case, one of the four specified carriers is present in the OFDM signal (the IF OFDM signal or the RF OFDM signal). Similarly, when two or three of the polarity control circuits 42, 43, 44, and 45 executes the polarity changes, corresponding two or three of the four specified carriers are present in the OFDM signal (the IF OFDM signal or the RF OFDM signal).

As understood from the previous description, the absence of each of the four specified carriers from the OFDM signal represents the unexecution of the related polarity changes. The presence of each of the four specified carriers in the OFDM signal represents the execution of the related polarity changes. The signal receiving apparatus detects whether or not each of the four specified carriers is present in a received OFDM signal. When one, two, or three of the four specified carriers are present in a received OFDM signal, the polarity of a corresponding FFT portion or the polarities of corresponding FFT portions of the FFT QAM decoding circuit 26 (see Fig. 3) are inverted. Then, the FFT processes are executed by the FFT QAM decoding circuit 26.

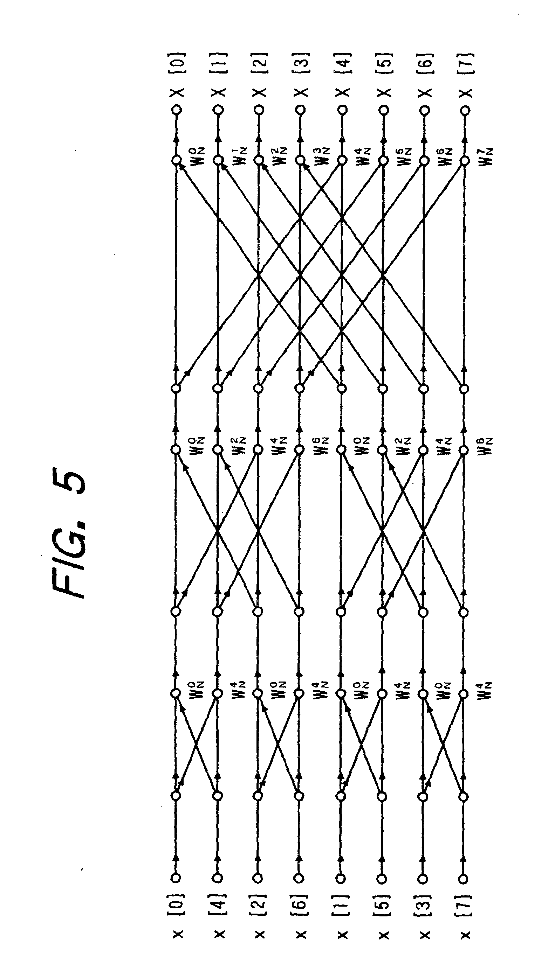

In the case where a data sequence has a length N equal to $2^L$, a fast Fourier transform (FFT) circuit divides discrete Fourier transform (DFT) of a size N into DFT's of a size N/2, and executes butterfly operations on a multiplexed basis. Fig. 5 shows a signal flow diagram of the butterfly operations which are executed in the case of N=8. In Fig. 5: x[0], x[1], x[2], x[3], x[4], x[5], x[6], and x[7] denote data sequences respectively; $W_N^0$, $W_N^1$, $W_N^2$, $W_N^3$, $W_N^4$, $W_N^5$, $W_N^6$, and $W_N^7$ denote rotation factors respectively; and X[0], X[1], X[2], X[3], X[4], X[5], X[6], and X[7] denote resultant DFT values respectively. In Fig. 5: the arrows denote the directions of propagation of signals respectively; the characters placed near some of the circles denote multiplied values (multipliers) respectively; and some of the circles denote the points of addition respectively. The FFT processes in Fig. 5 have three stages of butterfly operations. It should be noted that IFFT with N=256 have eight stages of butterfly operations.

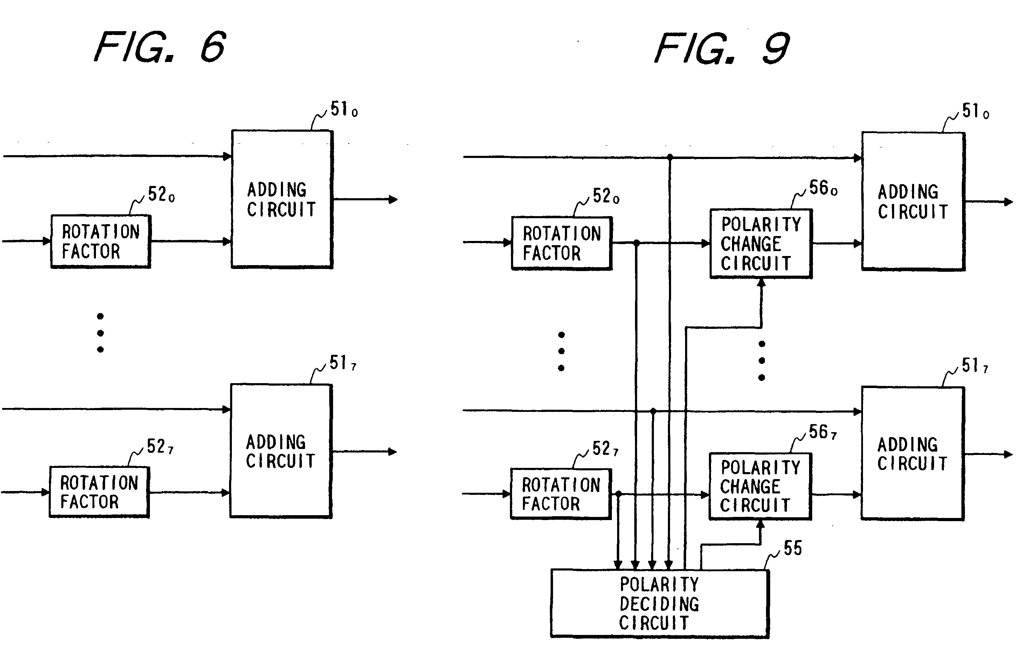

Fig. 6 shows a circuit portion corresponding to a final stage of the signal flow diagram in Fig. 5. In Fig. 6, data pieces outputted from two segments each corresponding to N=4 are applied to adding circuits $51_0$, $51_1$, $51_2$, $51_3$, $51_4$, $51_5$, $51_6$, and $51_7$. Also, the data pieces are multiplied by rotation factors $52_0$, $52_1$, $52_2$, $52_3$, $52_4$, $52_5$, $52_6$, and $52_7$ (that is, the rotation factors $W_N^0$, $W_N^1$, $W_N^2$, $W_N^3$, $W_N^4$, $W_N^5$, $W_N^6$, and $W_N^7$). The resultants of the multiplications are applied to the adding circuits $51_0$, $51_1$, $51_2$, $51_3$, $51_4$, $51_5$, $51_6$, and $51_7$. The data pieces and the resultants of the multiplications are added by the adding circuits $51_0$, $51_1$, $51_2$, $51_3$, $51_4$, $51_5$, $51_6$, and $51_7$. The adding circuits $51_0$, $51_1$, $51_2$, $51_3$, $51_4$, $51_5$, $51_6$, and $51_7$ output signals representing values X[0], X[1], X[2], X[3], X[4], X[5], X[6], and X[7] respectively. The values X[0], X[1], X[2], X[3], X[4], X[5], X[6], and X[7] are given by the following equation.

$$X[k] = DCT\{x[n]\} = \sum_{n=0}^{N-1} x[n]W_N^{kn} \qquad (W_N = e^{-j\frac{2\pi}{N}})$$

where k = 0, 1, 2, ⋯, 7. Provided that the sample values of the input signals and the FFT operation results represented by the output signals are exchanged, the FFT circuit operates as an IFFT circuit. During the IFFT process, first sample values result from IFFT of the values of even-numbered terms, and second sample values result from IFFT of the values of odd-numbered terms. Further, the second sample values are multiplied by given rotation factors, and the resultants of the multiplications are added to the first sample values to generate final IFFT signals.

In the IFFT device 4 of Fig. 4, the peak detectors 37, 38, 39, and 40 may be replaced by power/polarity detectors respectively. In this case, each of the power/polarity detectors derives information of the instantaneous power and information of the instantaneous polarity of the resultant of the real-part output signal and the imaginary-part output signal of the related IFFT circuit. Each of the power/polarity detectors outputs the power information and the polarity information to the data polarity deciding circuit 41. The data polarity deciding circuit 41 estimates or predicts the instantaneous power of the OFDM signal (the IF OFDM signal or the RF OFDM signal) in response to the power information and the polarity information fed from the power/polarity detectors. The data polarity deciding circuit 41 compares the estimated power with a predetermined reference power. The data polarity deciding circuit 41 generates the control signals for the polarity control circuits 42, 43, 44, and 45 in response to the result of the comparison between the estimated power and the reference power. The control signals for the polarity control circuits 42, 43. 44, and 45 are designed so that the actual power of the OFDM signal will not exceed the reference power (the IF OFDM signal or the RF OFDM signal).

Second Embodiment

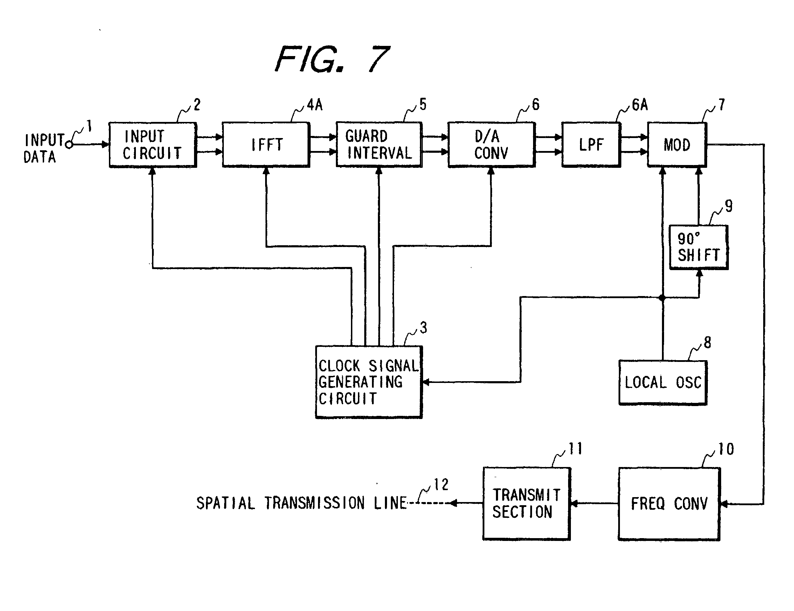

Fig. 7 shows a second embodiment of this invention which is similar to the embodiment of Fig. 1 except that an IFFT device 4A replaces the IFFT device 4 in Fig. 1.

In the embodiment of Fig. 7, 248 output signals from an input circuit 2 in each of a real part and an imaginary part are fed to the IFFT device 4A. The IFFT device 4A operates in response to a clock signal fed from a clock signal generating circuit 3. The IFFT device 4A is of the type capable of processing N parallel signals, where N denotes a natural number equal to 512 which is defined as a period. The IFFT device 4A has a set of 512 input terminals for the real part and also a set of 512 input terminals for the imaginary part. In each of the real part and the imaginary part, 256 input terminals among the 512 input terminals are used: In each of the real part and the imaginary part, the used 256 input terminals include 248 input terminals assigned to the 248 output signals from the input circuit 2. Specifically, the 248 output signals from the input circuit 2 in the real part are applied to 248 IFFT-device input terminals among the 512 input terminals for the real part, respectively. Regarding the real part, the used 256 IFFT-device input terminals are the 0-th input terminal to the 127-th input terminals and the 384-th input terminals to the 511-st input terminals respectively. The 248 output signals from the input circuit 2 in the imaginary part are applied to 248 IFFT-device input terminals among the 512 input terminals for the imaginary part, respectively. Regarding the imaginary part, the used 256 IFFT-device input terminals are the 0-th input terminal to the 127-th input terminals and the 384-th input terminals to the 511-st input terminals respectively. In respect of each of the real part and the imaginary part, a major portion of the operation of the IFFT device 4A corresponds to subjecting 248 carriers to 256 QAM responsive to the 248 output signals from the input circuit 2 respectively. Regarding the 248 output signals from the input circuit 2, the IFFT device 4A generates the 248 modulation-resultant signals in each of the real part and the imaginary part. The IFFT device 4A combines the 248 modulation-resultant signals and other modulation-resultant signals of the real part into a multiplexing-resultant signal corresponding to the real part. The IFFT device 4A outputs the multiplexing-resultant signal corresponding to the real part. Also. the IFFT device 4A combines the 248 modulation-resultant signals and other modulation-resultant signals of the imaginary part into a multiplexing-resultant signal corresponding to the imaginary part. The IFFT device 4A outputs the multiplexing-resultant signal corresponding to the imaginary part. The output signals of the IFFT device 4A are fed to a guard interval setting circuit 5. Fixed signals representing a logic state of "0" are applied to the unused input terminals of the IFFT device 4A in the real part and the imaginary part.

For example, information represented by a pair of signals applied to the 0-th input terminals of the IFFT device 4A for the real part and the imaginary part is assigned to a central-frequency carrier. For example, information represented by signals applied to the 127-th input terminals and the 384-th input terminals of the IFFT device 4A for the real part and the imaginary part are assigned to edge-frequency carriers corresponding to a Nyquist frequency.

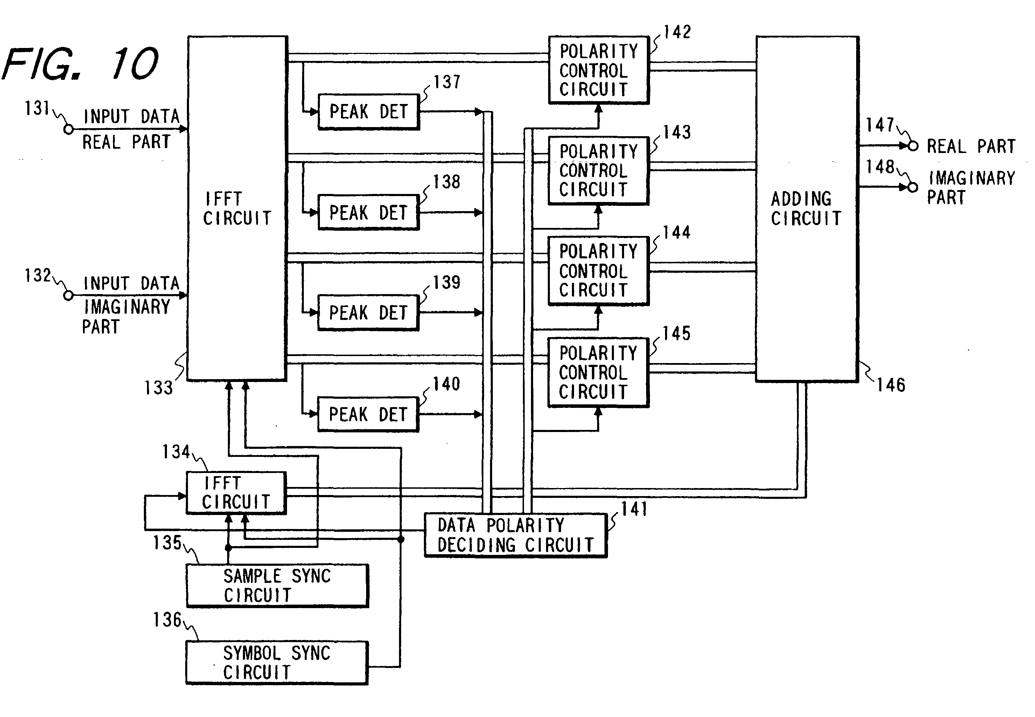

Fig. 8 shows an example of the frequency spectrum of an IF OFDM signal outputted from a quadrature modulator 7. Carries of the IF OFDM signal are spaced at equal frequency intervals which correspond to a symbol frequency. With reference to Fig. 8, a carrier having a frequency equal to a central IF frequency (that is, 10.7 MHz) F0 is referred to as a 0-th carrier. Carriers extending in a frequency upper side (a right-hand side) of the 0-th carrier are sequentially referred to as a 1-st carrier, a 2-nd carrier, a 3-rd carrier, ···, a 128-th carrier, ···, and a 256-th carrier respectively. Carriers extending in a frequency lower side (a left-hand side) of the 0-th carrier are sequentially referred to as a -1-st carrier, a -2-nd carrier, a -3-rd carrier, ···, a -128-th carrier, ···, and -256-th carrier respectively. In this way, the different order numbers are sequentially given to the carriers respectively.

With reference to Fig. 8, the central frequency F0 of the IF OFDM signal is equal to 10.7 MHz. The IF OFDM signal has 257 carriers in a frequency band of 99 kHz. Each of 248 carriers among the 257 carriers undergoes 256 QAM responsive to an 8-bit information piece. The 9 remaining carriers including the central-frequency carrier are used for transmitting calibration signals and other helper signals (other auxiliary signals).

With reference to Fig. 8, carriers in an upper side of the central-frequency carrier relate to signals applied to the first real-part and imaginary-part input terminals to the 127-th real-part and imaginary-part input terminals of the IFFT device 4A respectively. Carriers in a lower side of the central-frequency carrier relate to signals applied to the 384-th real-part and imaginary-part input terminals to the 511-st real-part and imaginary-part input terminals of the IFFT device 4A respectively. The 128-th carrier and the -128-th carrier correspond to the Nyquist frequency. A pair of signals applied to the 127-th input terminals of the IFFT device 4A for the real part and the imaginary part is assigned to the 128-th carrier. A pair of signals applied to the 384-th input terminals of the IFFT device 4A for the real part and the imaginary part is assigned to the -128-th carrier. Thus, signals applied to the 127-th input terminals and the 384-th input terminals of the IFFT device 4A for the real part and the imaginary part are transmitted by the 128-th carrier and the -128-th carrier. Specifically, fixed-voltage signals or fixed-logic-state signals are applied to the 127-th input terminals and the 384-th input terminals of the IFFT device 4A for the real part and the imaginary part to generate a pilot signal which is transmitted by the 128-th carrier and the -128-th carrier. The frequencies of the 128-th carrier and the -128-th carrier correspond to the Nyquist frequency multiplied by 1/2.

Third Embodiment

Fig. 9 shows a third embodiment of this invention which is a modification of the embodiment of Fig. 6. The embodiment of Fig. 9 includes adding circuits $51_0$, $51_1$, $51_2$, $51_3$, $51_4$, $51_5$, $51_6$, and $51_7$, multipliers (rotation factors) $52_0$, $52_1$, $52_2$, $52_3$, $52_4$, $52_5$, $52_6$, and $52_7$, polarity change circuits $56_0$, $56_1$, $56_2$, $56_3$, $56_4$, $56_5$, $56_6$, and $56_7$, and a polarity deciding circuit 55.

In Fig. 9, sample-value data pieces outputted from two segments each corresponding to N=4 are applied to first input terminals of the adding circuits $51_0$, $51_1$, $51_2$, $51_3$, $51_4$, $51_5$, $51_6$, and $51_7$. Also, the sample-value data pieces are fed to the polarity deciding circuit 55. In addition, the sample-value data pieces are multiplied by the rotation factors $52_0$, $52_1$, $52_0$, $52_3$, $52_4$, $52_5$, $52_6$, and $52_7$. The resultants of the multiplications are fed to the polarity deciding circuit 55. Also, the resultants of the multiplications are fed to second input terminals of the adding circuits $51_0$, $51_1$, $51_2$, $51_3$, $51_4$, $51_5$, $51_6$, and $51_7$ via the polarity change circuits $56_0$, $56_1$, $56_2$, $56_3$, $56_4$, $56_5$, $56_6$, and $56_7$. Accordingly, the sample-value data pieces and the multiplication resultants outputted from the polarity change circuits $56_0$, $56_1$, $56_2$, $56_3$, $56_4$, $56_5$, $56_6$, and $56_7$ are added by the adding circuits $51_0$, $51_1$, $51_2$, $51_0$, $51_1$, $51_5$, $51_6$, and $51_7$. The polarity change circuits $56_0$, $56_1$, $56_2$, $56_3$, $56_4$, $56_5$, $56_6$, and $56_7$ are controlled by the polarity deciding circuit 55.

The polarity deciding circuit 55 is similar to the structure including the peak detectors 37, 38, 39, and 40 and the data polarity deciding circuit 41 in Fig. 4. The polarity deciding circuit 55 monitors the sample values applied to the adding circuits $51_0$, $51_1$, $51_2$, $51_3$, $51_4$, $51_5$, $51_6$, and $51_7$. When the polarity deciding circuit 55 detects a sample value greater than a predetermined threshold value, the polarity deciding circuit 55 controls the polarity change circuit connected to the adding circuit to which the greater sample value is applied. The control of the polarity change circuit changes the polarity of the multiplication resultant applied to the adding circuit to which the greater sample value is applied, so that at least part of the greater sample value is cancelled by the multiplication resultant. The output signals of the adding circuits $51_0$, $51_1$, $51_2$, $51_3$, $51_4$, $51_5$, $51_6$, and $51_7$ are combined before being outputted.

Fourth Embodiment

Fig. 10 shows an OFDM signal generating apparatus according to a fourth embodiment of this invention. The OFDM signal generating apparatus of Fig. 10 can be used as the IFFT device 4 in Fig. 1 or the IFFT device 4A in Fig. 7.

The OFDM signal generating apparatus of Fig. 10 includes IFFT circuits 133 and 134, a sample sync circuit 135, a symbol sync circuit 136, peak detectors 137, 138, 139, and 140, a data polarity deciding circuit 141, polarity control circuits 142, 143, 144, and 145, and an adding circuit 146.

The OFDM signal generating apparatus of Fig. 10 has input terminals 131 and 132 for real-part data and imaginary-part data respectively. The input terminals 131 and 132 are followed by the IFFT circuit 133. The IFFT circuit 133 has four output terminals connected to the input terminals of the peak detectors 137, 138, 139, and 140 respectively. The output terminals of the IFFT circuit 133 are also connected to the input terminals of the polarity control circuits 142, 143, 144, and 145 respectively. The output terminals of the peak detectors 137, 138, 139, and 140 are connected to the data polarity deciding circuit 141. The polarity control circuits 142, 143, 144, and 145 have control terminals connected to the data polarity deciding circuit 141. The polarity control circuits 142, 143, 144, and 145 are followed by the adding circuit 146. The adding circuit 146 is followed by output terminals 147 and 148 for real-part data and imaginary-part data respectively.

The data polarity deciding circuit 141 is connected to the input side of the IFFT circuit 134. The output side of the IFFT circuit 134 is connected to the adding circuit 146. The sample sync circuit 135 is connected to the IFFT circuits 133 and 134. The symbol sync circuit 136 is connected to the IFFT circuits 133 and 134.

For every 1-symbol interval, 256-byte input digital data in a real-part and an imaginary part is fed to the IFFT circuit 133 via the input terminals 131 and 132. The IFFT circuit 133 includes a distributor and four IFFT sections. The IFFT circuit 133 operates in response to a sample clock signal (a sample sync signal) and a symbol clock signal (a symbol clock signal) fed from the sample sync circuit 135 and the symbol sync circuit 136. For every 1-symbol interval, the distributor in the IFFT circuit 133 divides the 256-byte input digital data into four 64-byte digital signals. Each of the four 64-byte digital signals is composed of a real-part set of 64 parallel digital signals each having 4 bits, and an imaginary-part set of 64 parallel digital signals each having 4 bits. In the IFFT circuit 133, the distributor outputs the four 64-byte digital signals to the four IFFT sections respectively.

Each of the IFFT sections in the IFFT circuit 133 is of the type capable of processing N parallel signals, where N denotes a natural number equal to 256 which is defined as a period. Each of the IFFT sections has a set of 256 input terminals for the real part and also a set of 256 input terminals for the imaginary part. Regarding each of the IFFT sections, the 64 parallel digital signals in the real part are applied to 64 IFFT input terminals among the 256 input terminals for the real part, respectively. Similarly, the 64 parallel digital signals in the imaginary part are applied to 64 IFFT input terminals among the 256 input terminals for the imaginary part, respectively. The 64 used input terminals of the first IFFT section in each of the real part and the imaginary part are chosen to correspond to $\pm 4m$-th carriers, where "m" denotes natural numbers equal to 0, 1, 2, $\cdots$, 31. The 64 used input terminals of the second IFFT section in each of the real part and the imaginary part are chosen to correspond to $(\pm 4m+1)$-th carriers. The 64 used input terminals of the third IFFT section in each of the real part and the imaginary part are chosen to correspond to $(\pm 4m+2)$-th carriers. The 64 used input terminals of the fourth IFFT section in each of the real part and the imaginary part are chosen to correspond to $(\pm 4m+3)$-th carriers.

Thus, the 256 carriers are separated into four groups in a comb-like distribution manner. Each of the four groups has 64 carriers. The four IFFT sections in the IFFT circuit 133 relate to the four carrier groups respectively.

Regarding each of the real part and the imaginary part, the operation of each of the IFFT sections in the IFFT circuit 133 corresponds to subjecting 64 carriers to 256 QAM responsive to the 64 parallel digital signals respectively. Regarding the 64 parallel digital signals, each of the IFFT sections generates the 64 modulation-resultant signals in each of the real part and the imaginary part. Each of the IFFT sections combines the 64 modulation-resultant signals of the real part into a multiplexing-resultant signal corresponding to the real part. Each of the IFFT sections outputs the multiplexing-resultant signal corresponding to the real part. Also, each of the IFFT sections combines the 64 modulation-resultant signals of the imaginary part into a multiplexing-resultant signal corresponding to the imaginary part. Each of the IFFT sections outputs the multiplexing-resultant signal corresponding to the imaginary part.

The peak detector 137 receives the real-part output signal and the imaginary-part output signal of the first IFFT section in the IFFT circuit 133. The device 137 detects an instantaneous peak power (value or level) of the resultant of the real-part output signal and the imaginary-part output signal of the first IFFT section. Also, the device 137 detects the polarity of the resultant of the real-part output signal and the imaginary-part output signal of the first IFFT section which occurs at the moment of the occurrence of the detected peak power. Further, the device 137 detects the moment or time position of the occurrence of the detected peak power with respect to the related IFFT process. The peak detector 137 feeds the data polarity deciding circuit 141 with information of the detected peak power, the detected polarity, and the detected time position of the peak power.

The peak detector 138 receives the real-part output signal and the imaginary-part output signal of the second IFFT section in the IFFT circuit 133. The device 138 detects an instantaneous peak power (value or level) of the resultant of the real-part output signal and the imaginary-part output signal of the second IFFT section. Also, the device 138 detects the polarity of the resultant of the real-part output signal and the imaginary-part output signal of the second IFFT section which occurs at the moment of the occurrence of the detected peak power. Further, the device 138 detects the moment or time position of the occurrence of the detected peak power with respect to the related IFFT process. The peak detector 138 feeds the data polarity deciding circuit 141 with information of the detected peak power, the detected polarity, and the detected time position of the peak power.

The peak detector 139 receives the real-part output signal and the imaginary-part output signal of the third IFFT section in the IFFT circuit 133. The device 139 detects an instantaneous peak power (value or level) of the resultant of the real-part output signal and the imaginary-part output signal of the third IFFT section. Also, the device 139 detects the polarity of the resultant of the real-part output signal and the imaginary-part output signal of the third IFFT section which occurs at the moment of the occurrence of the detected peak power. Further, the device 139 detects the moment or time position of the occurrence of the detected peak power with respect to the related IFFT process. The peak detector 139 feeds the data polarity deciding circuit 141 with information of the detected peak power, the detected polarity, and the detected time position of the peak power.

The peak detector 140 receives the real-part output signal and the imaginary-part output signal of the fourth IFFT section in the IFFT circuit 133. The device 140 detects an instantaneous peak power (value or level) of the resultant of the real-part output signal and the imaginary-part output signal of the fourth IFFT section. Also, the device 140 detects the polarity of the resultant of the real-part output signal and the imaginary-part output signal of the fourth IFFT section which occurs at the moment of the occurrence of the detected peak power. Further, the device 140 detects the moment or time position of the occurrence of the detected peak power with respect to the related IFFT process. The peak detector 140 feeds the data polarity deciding circuit 141 with information of the detected peak power, the detected polarity, and the detected time position of the peak power.

The polarity control circuit 142 receives the real-part output signal and the imaginary-part output signal of the first IFFT section in the IFFT circuit 133. The polarity control circuit 142 selectively changes or inverts the polarities of the real-part output signal and the imaginary-part output signal of the first IFFT section in response to a control signal fed from the data polarity deciding circuit 141. The polarity control circuit 142 outputs the resultant real-part signal and the resultant imaginary-part signal to the adding circuit 146.

The polarity control circuit 143 receives the real-part output signal and the imaginary-part output signal of the second IFFT section in the IFFT circuit 133. The polarity control circuit 143 selectively changes or inverts the polarities of the real-part output signal and the imaginary-part output signal of the second IFFT section in response to a control signal fed from the data polarity deciding circuit 141. The polarity control circuit 143 outputs the resultant real-part signal and the resultant imaginary-part signal to the adding circuit 146.

The polarity control circuit 144 receives the real-part output signal and the imaginary-part output signal of the third IFFT section in the IFFT circuit 133. The polarity control circuit 144 selectively changes or inverts the polarities of the real-part output signal and the imaginary-part output signal of the third IFFT section in response to a control signal fed from the data polarity deciding circuit 141. The polarity control circuit 144 outputs the resultant real-part signal and the resultant imaginary-part signal to the adding circuit 146.

The polarity control circuit 145 receives the real-part output signal and the imaginary-part output signal of the fourth IFFT section in the IFFT circuit 133. The polarity control circuit 145 selectively changes or inverts the polarities of the real-part output signal and the imaginary-part output signal of the fourth IFFT section in response to a control signal fed from the data polarity deciding circuit 141. The polarity control circuit 145 outputs the resultant real-part signal and the resultant imaginary-part signal to the adding circuit 146.

The adding circuit 146 combines the real-part output signals of the polarity control circuits 142, 143, 144, and 145 and a real-part output signal of the IFFT circuit 134 into a multiplexing-resultant signal corresponding to the real part. The adding circuit 146 combines the imaginary-part output signals of the polarity control circuits 142, 143, 144, and 145 and an imaginary-part output signal of the IFFT circuit 134 into a multiplexing-resultant signal corresponding to the imaginary part. The multiplexing-resultant signals corresponding to the real part and the imaginary part are transmitted from the adding circuit 146 to an external device via the output terminals 147 and 148 respectively.

A first example of the data polarity deciding circuit 141 operates as follows. The data polarity deciding circuit 141 estimates or predicts the instantaneous peak power of an OFDM signal (an IF OFDM signal or an RF OFDM signal) in response to the information of the detected peak powers, the detected polarities, and the detected time positions of the peak powers which is fed from the peak detectors 137, 138, 139, and 140. The data polarity deciding circuit 141 compares the estimated peak power with a predetermined reference power. The data polarity deciding circuit 141 generates the control signals for the polarity control circuits 142, 143, 144, and 145 in response to the result of the comparison between the estimated peak power and the reference power. Also, the data polarity deciding circuit 141 determines the states of the control signals for the polarity control circuits 142, 143, 144, and 145 in response to the information of the detected polarities which is fed from the peak detectors 137, 138, 139, and 140. The data polarity deciding circuit 141 outputs the generated control signals to the polarity control circuits 142, 143, 144, and 145 respectively.

The control signals outputted from the first example of the data polarity deciding circuit 141 to the polarity control circuits 142, 143, 144, and 145 are designed to enable the following processes. In the case where the estimated peak power is lower than the reference power, the polarity control circuits 142, 143, 144, and 145 do not change the polarities of the real-part output signals and the imaginary-part output signals of the IFFT sections in the IFFT circuit 133. Accordingly, in this case, the real-part output signals and the imaginary-part output signals of the IFFT sections pass through the polarity control circuits 142, 143, 144, and 145 without undergoing any polarity changes. In the case where the estimated peak power is equal to or higher than the reference power, one, two, or three of the polarity control circuits 142, 143, 144, and 145 change (invert) the polarities of the real-part output signals and the imaginary-part output signals of the related IFFT sections while the other polarity control circuit or circuits do not change the polarities of the real-part output signals and the imaginary-part output signals of the related IFFT sections. Accordingly, in this case, the real-part output signals and the imaginary-part output signals of one, two, or three of the IFFT sections pass through the related polarity control circuits with undergoing polarity changes (polarity inversions) while the real-part output signals and the imaginary-part output signals of the other IFFT section or sections pass through the related polarity control circuits without undergoing any polarity changes. The execution of the polarity changes prevents the actual instantaneous peak power of the OFDM signal (the IF OFDM signal or the RF OFDM signal) from exceeding the reference power.

For example, in the case where the estimated peak power is equal to or higher than the reference power, detection is made as to which of the real-part output signals and the imaginary-part output signals of the IFFT sections in the IFFT circuit 133 are a predominant cause of the estimated peak power (a predominant component of the estimated peak power). One of the polarity control circuits 142, 143, 144, and 145, which relates to the predominant-cause IFFT output signals, does not change the predominant-cause IFFT output signals. The other polarity control circuits change or invert the polarities of the real-part output signal and the imaginary-part output signal of the related IFFT sections.

A second example of the data polarity deciding circuit 141 operates as follows. The data polarity deciding circuit 141 monitors the detected peak powers represented by the output signals of the peak detectors 137, 138. 139, and 140. The data polarity deciding circuit 141 compares the detected peak powers with a predetermined reference power. The data polarity deciding circuit 141 generates the control signals for the polarity control circuits 142, 143, 144, and 145 in response to the result of the comparisons between the detected peak powers and the reference power. Also, the data polarity deciding circuit 141 determines the states of the control signals for the polarity control circuits 142, 143, 144, and 145 in response to the information of the detected polarities and the information of the detected time positions of the peak powers which are fed from the peak detectors 137, 138, 139, and 140. The data polarity deciding circuit 141 outputs the generated control signals to the polarity control circuits 142, 143, 144, and 145 respectively.

The control signals outputted from the second example of the data polarity deciding circuit 141 to the polarity control circuits 142, 143, 144, and 145 are designed to enable the following processes. In the case where one of the detected peak powers exceeds the reference power while the other detected peak powers do not exceed the reference power, at least one of the polarity control circuits which relate to the latter detected peak powers is activated to execute polarity changes. The execution of the polarity changes results in cancellation of at least part of the great peak power.

Information of the polarity changes is transmitted by a specified carrier or specified carriers selected out of 257 carriers in the OFDM signal. A fixed signal corresponding to a voltage of "0" is applied to a pair of a real-part input terminal and an imaginary-part input terminal of the IFFT circuit 133 which correspond to the specified carrier or each of the specified carriers. The application of the fixed signal of "0" to the IFFT circuit 133 nullifies the specified carrier or carriers in respect of the output signals of the IFFT circuit 133. The nullification of the specified carrier or carriers provides a corresponding carrier hole or corresponding carrier holes. The control signals for the polarity control circuits 142, 143, 144, and 145 are fed from the data polarity deciding circuit 141 to the IFFT circuit 134 as the information of the polarity changes. The IFFT circuit 134 operates in response to the sample clock signal (the sample sync signal) and the symbol clock signal (the symbol sync signal) fed from the sample sync circuit 135 and the symbol sync circuit 136. Since the IFFT circuits 133 and 134 are driven by the common sample clock signal and the common symbol clock signal, the output signals of the IFFT circuit 134 are synchronous with the output signals of the IFFT circuit 133. The operation of the IFFT circuit 134 corresponds to subjecting the specified carrier or carriers to modulation (for example, QAM) responsive to the information of the polarity changes. The IFFT circuit 134 generates the modulation-resultant signals, and combines the modulation-resultant signals into a multiplexing-result signal of the real part and a multiplexing-resultant signal of the imaginary part. The IFFT circuit 134 outputs the multiplexing-resultant signals of the real part and the imaginary part to the adding circuit 146.

According to a first example of the modulation implemented by the IFFT circuit 134, four specified carriers are assigned to the information of the polarity changes by the polarity control circuit 142, the information of the polarity changes by the polarity control circuit 143, the information of the polarity changes by the polarity control circuit 144, and the information of the polarity changes by the polarity control circuit 145, respectively. According to a second example of the modulation implemented by the IFFT circuit 134, a first specified carrier is assigned to the information of the polarity changes by the polarity control circuit 142 and the information of the polarity changes by the polarity control circuit 143 while a second specified carrier is assigned to the information of the polarity changes by the polarity control circuit 144 and the information of the polarity changes by the polarity control circuit 145. A third example of the modulation implemented by the IFFT circuit 134 is 16 QAM. According to the third example, the polarity-change information fed from the data polarity deciding circuit 141 is handled by the IFFT circuit 134 as a 4-bit modulating signal, and one specified carrier is modulated in accordance with the 4-bit modulating signal.

Regarding IFFT generating 257 carries in a frequency band of 99 kHz, the effective symbol interval is equal to about 2.6 msec (= 256/99,000). For every symbol, the IFFT circuit 133 completes the IFFT processes in about 2 msec. For every symbol, the peak detectors 137, 138, 139, and 140, the data polarity deciding circuit 141, the polarity control circuits 142, 143, 144, and 145, and the IFFT circuit 134 complete their target operations in about 0.5 msec. Accordingly, in every symbol interval, the signals outputted to the adding circuit 146 from the IFFT circuit 134 are available which relate to the symbol same as the symbol of the signals currently outputted to the adding circuit 146 from the polarity control circuits 142, 143, 144, and 145. In addition, the output signals of the IFFT circuit 134 are orthogonal with respect to the output signals of the IFFT circuit 133.

The IFFT circuit 134 may include a ROM having 16 storage areas which store respective information pieces each representative of a set of IFFT signals. The addresses of the 16 storage segments are assigned to 16 different states of the 4-bit polarity-change information fed from the data polarity deciding circuit 141 respectively. The 4-bit polarity-change information is applied to the ROM as an address signal, and the information piece of IFFT signals is read out from the storage area of the ROM which corresponds to the address signal. The readout information piece of IFFT signals is transmitted to the adding circuit -146 as output signals of the IFFT circuit 134.

In the case where output signals of the IFFT circuit 134 are periodical, the wholes of the output signals can be generated from only information corresponding to at least parts of the output signals. In this case, it is preferable that the ROM stores information pieces corresponding to parts of output signals. In the case where the phases of output signals of the IFFT circuit 134 are different, it is preferable to adjust the timing of reading out an information piece from the ROM. In the case where output signals of the IFFT circuit 134 are similar except for amplitude, it is preferable to use a fixed-level attenuator which processes an information piece read out from the ROM.

The peak detectors 137, 138, 139, and 140 may be replaced by power/polarity detectors respectively. In this case, each of the power/polarity detectors derives information of the instantaneous power and information of the instantaneous polarity of the resultant of the real-part output signal and the imaginary-part output signal of the related IFFT section in the IFFT circuit 133. Each of the power/polarity detectors outputs the power information and the polarity information to the data polarity deciding circuit 141. The data polarity deciding circuit 141 estimates or predicts the instantaneous power of the OFDM signal (the IF OFDM signal or the RF OFDM signal) in response to the power information and the polarity information fed from the power/polarity detectors. The data polarity deciding circuit 141 compares the estimated power with a predetermined reference power. The data polarity deciding circuit 141 generates the control signals for the polarity control circuits 142, 143, 144, and 145 in response to the result of the comparison between the estimated power and the reference power. The control signals for the polarity control circuits 142, 143, 144, and 145 are designed so that the actual power of the OFDM signal will not exceed the reference power (the IF OFDM signal or the RF OFDM signal).

Fifth Embodiment

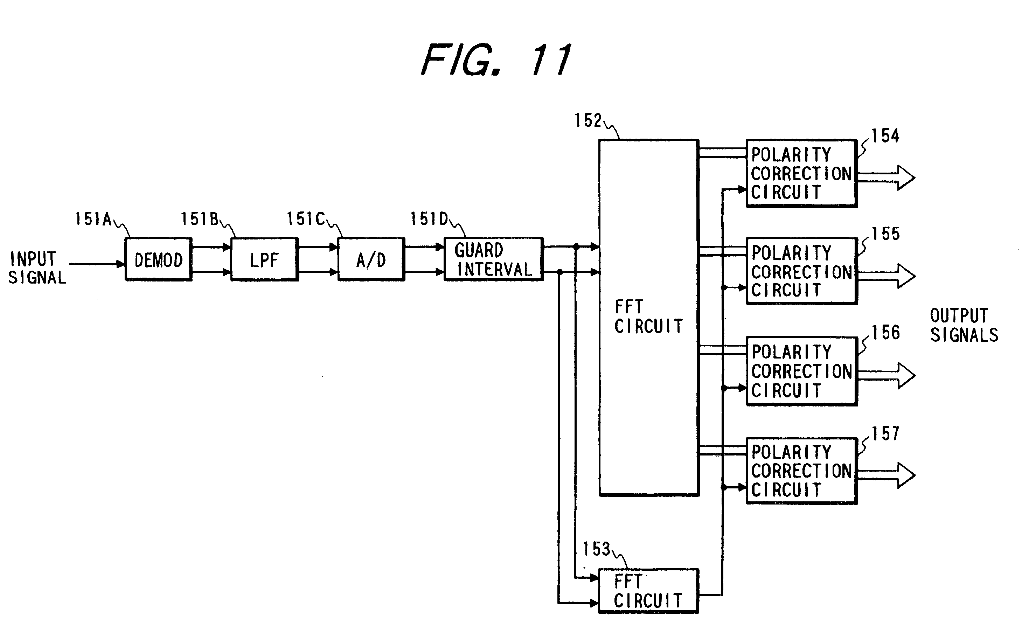

Fig. 11 shows an OFDM signal decoding apparatus (an OFDM signal demodulating apparatus) according to a fifth embodiment of this invention. The OFDM signal decoding apparatus of Fig. 11 can handle an OFDM signal generated by a signal transmitter including the OFDM signal generating apparatus of Fig. 10. The OFDM signal decoding apparatus of Fig. 11 can be used as the combination of the quadrature demodulator 16, the LPF 21, the A/D converter 22, the guard interval processing circuit 25, and the FFT QAM decoding circuit 26 in Fig. 3.

The OFDM signal decoding apparatus of Fig. 11 includes a quadrature demodulator 151A, an LPF 151B, an A/D converter 151C, a guard interval processing circuit 151D, FFT circuits 152 and 153, and polarity correction circuits 154, 155, 156, and 157.

An IF OFDM signal (or an RF OFDM signal) is inputted into the quadrature demodulator 151A. The quadrature demodulator 151A is sequentially followed by the LPF 151B, the A/D converter 151C, and the guard interval processing circuit 151D. The quadrature demodulator 151A, the LPF 151B, the A/D converter 151C, and the guard interval processing circuit 151D are similar to the quadrature demodulator 16, the LPF 21, the A/D converter 22, and the guard interval processing circuit 25 in Fig. 3 respectively. The real-part and imaginary-part output terminals of the guard interval processing circuit 151D are connected to real-part and imaginary input terminals of the FFT circuit 152 respectively. Also, the real-part and imaginary-part output terminals of the guard interval processing circuit 151D are connected to real-part and imaginary input terminals of the FFT circuit 153 respectively. The FFT circuit 152 has four output terminals connected to the input terminals of the polarity correction circuits 154, 155, 156, and 157 respectively. The FFT circuit 153 has four 1-bit output terminals (or one 4-bit output terminal) connected to control terminals of the polarity correction circuits 154, 155, 156, and 157 respectively. The output terminals of the polarity correction circuits 154, 155, 156, and 157 lead to a later stage (not shown).

As previously described, the IF OFDM signal is inputted into the quadrature demodulator 151A. In response to a pair of quadrature local oscillator signals, the IF OFDM signal is demodulated by the quadrature demodulator 151A into baseband signals corresponding to a real part and an imaginary part (an I signal and a Q signal) respectively. The real-part and imaginary-part output signals of the quadrature demodulator 151A are sequentially processed by the LPF 151B, the A/D converter 151C, and the guard interval processing circuit 151D. The operation of the LPF 151B is similar to the operation of the LPF 21 in Fig. 3. The operation of the A/D converter 151C is similar to the operation of the A/D converter 22 in Fig. 3. The operation of the guard interval processing circuit 151 D is similar to the operation of the guard interval processing circuit 25 in Fig. 3.

Real-part and imaginary-part output signals of the guard interval processing circuit 151D are fed to the FFT circuits 152 and 153. The FFT circuit 152 subjects the output signals of the guard interval processing circuit 151D to processing which corresponds to complex fast Fourier transform. According to the complex fast Fourier transform processing, the FFT circuit 152 recovers information pieces transmitted by carriers in a first group, information pieces transmitted by carriers in a second group, information pieces transmitted by carriers in a third group, and information pieces transmitted by carriers in a fourth group. The recovered information pieces corresponding to the first carrier group are fed from the FFT circuit 152 to the polarity correction circuit 154. The recovered information pieces corresponding to the second carrier group are fed from the FFT circuit 152 to the polarity correction circuit 155. The recovered information pieces corresponding to the third carrier group are fed from the FFT circuit 152 to the polarity correction circuit 156. The recovered information pieces corresponding to the fourth carrier group are fed from the FFT circuit 152 to the polarity correction circuit 157.

The FFT circuit 153 subjects the output signals of the guard interval processing circuit 151D to processing which corresponds to complex fast Fourier transform. According to the complex fast Fourier transform processing, the FFT circuit 153 recovers 4-bit polarity-change information transmitted by a specified carrier or carriers. The bits of the recovered polarity-change information are fed from the FFT circuit 153 to the polarity correction circuits 154, 155, 156, and 157 as control signals respectively.

The polarity correction circuit 154 selectively changes or inverts the polarities of the first-carrier-group information pieces in response to the control signal fed from the IFFT circuit 153. This polarity change enables the recovery of the original information pieces. The polarity correction circuit 154 outputs the resultant information pieces. The polarity correction circuit 155 selectively changes or inverts the polarities of the second-carrier-group information pieces in response to the control signal fed from the IFFT circuit 153. This polarity change enables the recovery of the original information pieces. The polarity correction circuit 155 outputs the resultant information pieces. The polarity correction circuit 156 selectively changes or inverts the polarities of the third-carrier-group information pieces in response to the control signal fed from the IFFT circuit 153. This polarity change enables the recovery of the original information pieces. The polarity correction circuit 156 outputs the resultant information pieces. The polarity correction circuit 157 selectively changes or inverts the polarities of the fourth-carrier-group information pieces in response to the control signal fed from the IFFT circuit 153. This polarity change enables the recovery of the original information pieces. The polarity correction circuit 157 outputs the resultant information pieces.

In a transmitter side, words of a Gray code may be assigned to different levels of a QAM signal point respectively. For example, a Gray-code word "0100" is assigned to a signal point level of "+8". A Gray-code word "0101" is assigned to a signal point level of "+7". A Gray-code word "0111" is assigned to a signal point level of "+6". A Gray-code word "0110" is assigned to a signal point level of "+5". A Gray-code word "0010" is assigned to a signal point level of "+4". A Gray-code word "0011" is assigned to a signal point level of "+3". A Gray-code word "0001" is assigned to a signal point level of "+2". A Gray-code word "0000" is assigned to a signal point level of "+1". A Gray-code word "1000" is assigned to a signal point level of "-1". A Gray-code word "1001" is assigned to a signal point level of "-2". A Gray-code word "1011" is assigned to a signal point level of "-3". A Gray-code word "1010" is assigned to a signal point level of "-4". A Gray-code word "1110" is assigned to a signal point level of "-5". A Gray-code word "1111" is assigned to a signal point level of "-6". A Gray-code word "1101" is assigned to a signal point level of "-7". A Gray-code word "1100" is assigned to a signal point level of "-8". In this case, an inversion of every signal point level is generated by inverting only the highest bit (MSB) of a related Gray-code word. Each of the polarity correction circuits 154, 155, 156, and 157 may have a conversion table in which signal points symmetrical with respect to the origin of a 256 QAM signal point arrangement are defined as digital data values. In this case, each of the polarity correction circuits 154, 155, 156, and 157 executes the polarity control in response to the polarity-change information piece by referring to the conversion table.

Sixth Embodiment

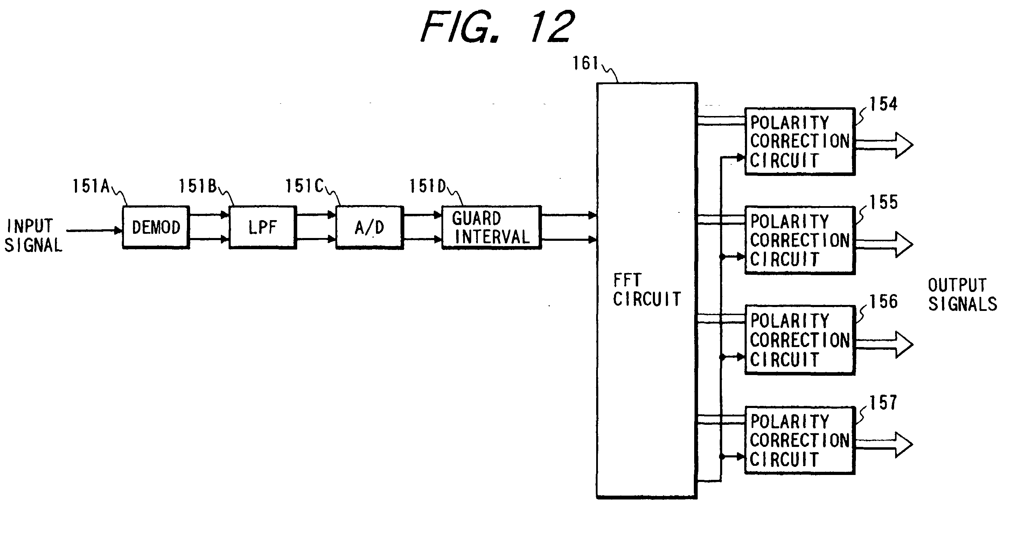

Fig. 12 shows a sixth embodiment of this invention which is similar to the embodiment of Fig. 11 except that an FFT circuit 161 replaces the FFT circuits 152 and 153 in Fig. 11. The FFT circuit 161 in Fig. 12 is designed as a combination of the FFT circuits 152 and 153 in Fig. 11.

A frequency division multiplexed signal generating apparatus includes a distributor separating digital information signals into plural groups. Plural operation circuits convert the plural groups of the digital information signals into plural frequency division multiplexed signals, respectively. Plural peak detecting circuits detect peak powers of the plural frequency division multiplexed signals, respectively. Detection is made as to whether or not the detected peak powers are lower than a threshold power. In cases where at least one of the detected peak powers is equal to or higher than the threshold power, at least one of polarities of the plural frequency division multiplexed signals is controlled in a direction of canceling the peak power being equal to or higher than the given power. An adding circuit combines the plural frequency division multiplexed signals into a final frequency division multiplexed signal.

**Claims**

1.　A frequency division multiplexed signal generating apparatus comprising:

　　an input circuit (2) for dividing an input signal into plural input portion signals;
　　plural IFFT circuits (33, 34, 35, 36);
　　an IFFT device (4) for generating plural frequency division multiplexed signals by using the IFFT circuits (33, 34, 35, 36) and thereby implementing digital modulation of subcarriers, which are orthogonal with each other, in accordance with the plural input portion signals;
　　polarity control circuits (42, 43, 44, 45) for selectively inverting and non-inverting polarities of the plural frequency division multiplexed signals, respectively;
　　an adding circuit (46) for combining output signals from the polarity control circuits (42, 43, 44, 45) into a first final frequency division multiplexed signal;
　　means (41, 48) for generating polarity-inversion information relating to the inversion and non-inversion of the polarities of the plural frequency division multiplexed signals;
　　a modulator (7) for adding the polarity-inversion information to the first final frequency division multiplexed signal to generate a second final frequency division multiplexed signal;

plural peak voltage detection circuits (37, 38, 39, 40) for detecting peak voltages corresponding to the plural frequency division multiplexed signals, polarities of the peak voltages, and time positions of the occurrence of the peak voltages; and

a polarity designating circuit (41) for estimating a peak power of the second final frequency division multiplexed signal from the detected peak voltages, the detected polarities of the peak voltages, and the detected time positions of the occurrence of the peak voltages, and for, when the estimated peak power is higher than a predetermined reference power, controlling the polarity control circuits (42, 43, 44, 45) to invert at least one of the polarities of the plural frequency division multiplexed signals to suppress an actual peak power of the second final frequency division multiplexed signal.

2. A frequency division multiplexed signal receiving apparatus for demodulating a frequency division multiplexed signal, which is generated by the frequency division multiplexed signal generating apparatus of claim 1, into plural output signals, the frequency division multiplexed signal receiving apparatus comprising:

a first demodulation circuit (151A, 153) for demodulating the frequency division multiplexed signal into polarity-inversion information relating to an inversion and non-inversion of the polarities of plural frequency divison multiplexed signals that are generated in the frequency division multiplexed signal generating apparatus of Claim 1 by dividing an input signal into plural input portion signals and by implementing digital modulation of mutually orthogonal subcarriers in accordance with the plural input portion signals using plural IFFT circuits; FFT circuits (152);

a second demodulation circuit (151A, 152) including the FFT circuits (152) for using the FFT circuits (152) and thereby subjecting the frequency division multiplexed signal to digital demodulation to generate demodulation output signals corresponding to subcarriers respectively; and

polarity correction circuits (154, 155, 156, 157) for inverting and non-inverting polarities of the demodulation output signals in response to the polarity-inversion information, thereby generating said plural output signals.

3. A method of generating a frequency division multiplexed signal, comprising the steps of:

a) dividing an input signal into plural input portion signals;

b) generating plural frequency division multiplexed signals by using IFFTs and thereby implementing digital modulation of subcarriers, which are orthogonal with each other, in accordance with the plural input portion signals;

c) selectively inverting and non-inverting polarities of the plural frequency division multiplexed signals to generate intermediate signals, respectively;

d) combining the intermediate signals into a first final frequency division multiplexed signal;

e) generating polarity-inversion information relating to the inversion and non-inversion of the polarities of the plural frequency division multiplexed signals;

f) adding the polarity-inversion information to the first final frequency division multiplexed signal to generate a second final frequency division multiplexed signal;

g) detecting peak voltages corresponding to the plural frequency division multiplexed signals, polarities of the peak voltages; and time positions of the occurrence of the peak voltages;

h) estimating a peak power of the second final frequency division multiplexed signal from the detected peak voltages, the detected polarities of the peak voltages, and the detected time positions of the occurrence of the peak voltages; and

i) when the estimated peak power is higher than a predetermined reference power, controlling the polarity inversion and non-inversion by the step c) to invert at least one of the polarities of the plural frequency division multiplexed signals to suppress an actual peak power of the second final frequency division multiplexed signal.

4. A method of demodulating a frequency division multiplexed signal, which is generated by the method in claim 3, into plural output signals, comprising the steps of:

demodulating the frequency division multiplexed signal into polarity-inversion information relating to an inversion and non-inversion of the polarities of plural frequency divison multiplexed signals that are generated in the frequency division multiplexed signal generating apparatus of Claim 1 by dividing an input signal into plural input portion signals and by implementing digital modulation of mutually orthogonal subcarriers in accordance with the plural input portion signals using plural IFFT circuits;

using FFTs and thereby subjecting the frequency division multiplexed signal to digital demodulation to generate demodulation output signals corresponding to subcarriers respectively; and

inverting and non-inverting polarities of the demodulation output signals in response to the polarity-inversion information, thereby generating said plural output signals.

**Patentansprüche**

1.  Frequenzmultiplex-Signalerzeugungsgerät mit:

    einer Eingabeschaltung (2) zum Teilen eines Eingangssignals in eine Vielzahl von Eingangabschnittssignalen;
    einer Vielzahl von IFFT-Schaltungen (33, 34, 35, 36);
    einer IFFT-Einrichtung (4)zum Erzeugen eines Mehrzahl von Frequenzmultiplexsignalen unter Verwendung der IFFT-Schaltungen (33, 34, 35, 36) und somit Realisieren von digitaler Modulation von Unterträgern, die orthogonal zueinander stehen, gemäß der Vielzahl von Eingangsabschnittssignalen;
    Polaritätssteuerschaltungen (42, 43, 44, 45) zum selektiven Invertieren und Nichtinvertieren von Polaritäten der jeweiligen Mehrzahl von Frequenzmultiplexsignalen;
    einer Addierschaltung (46) zum Zusammenfassen von Ausgangssignalen aus den Polaritätssteuerschaltungen (42, 43, 44, 45) in ein erstes endgültiges Frequenzmultiplexsignal;
    einem Mittel (41, 48) zum Erzeugen von Polaritätsinversionsinformationen bezüglich der Inversion und Nichtinversion der Polaritäten der Mehrzahl von Frequenzmultiplexsignalen;
    einem Modulator (7) zum Addieren der Polaritätsinversionsinformation mit dem ersten endgültigen Frequenzmultiplexsignal zum Erzeugen eines zweiten endgültigen Frequenzmultiplexsignals;
    einer Mehrzahl von Spitzenspannungsfeststellschaltungen (37, 38, 39, 40) zum Feststellen von Spitzenspannungen entsprechend der Mehrzahl von Frequenzmultiplexsignalen, Polaritäten der Spitzenspannungen und von Zeitlagen des Auftretens der Spitzenspannungen; und mit
    einer Polaritätsbestimmungsschaltung (41) zum Schätzen einer Spitzenleistung des zweiten endgültigen Frequenzmultiplexsignals aus den festgestellten Spitzenspannungen, den festgestellten Polaritäten der Spitzenspannungen und aus den festgestellten Zeitlagen des Auftretens der Spitzenspannungen und zum Steuern der Polaritätssteuerschaltungen (42, 43, 44, 45), wenn die geschätzte Spitzenleistung höher als ein vorbestimmter Bezugswert ist, um wenigstens eine der Polaritäten der Mehrzahl von Frequenzmultiplexsignalen zu invertieren, um eine aktuelle Spitzenleistung des zweiten endgültigen Frequenzmultiplexsignals zu unterdrükken.

2.  Frequenzmultiplex-Signalempfangsgerät zum Demodulieren eines Frequenzmultiplexsignals, das das Frequenzmultiplex-Signalerzeugungsgerät nach Patentanspruch 1 erzeugt hat, in eine Vielzahl von Ausgangssignalen, mit:

    einer ersten Demodulationsschaltung (151A, 153) zum Demodulieren des Frequenzmultiplexsignals in Polaritätsinversionsinformationen bezüglich einer Inversion und Nichtinversion der Polaritäten einer Mehrzahl von Frequenzmultiplexsignalen, die das Frequenzmultiplex-Signalerzeugungsgerät nach Patentanspruch 1 durch Teilen eines Eingangssignals in eine Vielzahl von Eingangsabschnittssignalen und durch Realisieren einer Digitalmodulation von wechselseitig orthogonalen Unterträgern gemäß der Vielzahl eingegebener Abschnittssignale unter Verwendung einer Vielzahl von IFFT-Schaltungen erzeugt hat;
    FFT-Schaltungen (152);
    einer zweiten Demodulationsschaltung (151A, 152,), die FFT-Schaltungen (152) zur Verwendung der FFT-Schaltungen (152) enthalten und um dadurch das Frequenzmultiplexsignal der Digitalmodulation zu unterziehen, um Demodulaltionsausgangssignale gemäß den jeweiligen Unterträgern zu erzeugen; und mit
    Polaritätskorrekturschaltungen (154, 155, 156, 157) für Invertier- und Nichtinvertierpolaritäten der Demodulationsausgangssignale als Reaktion auf die Polaritätsinversionsinformation, wodurch die Vielzahl von Ausgangssignalen erzeugt werden.

3.  Verfahren zum Erzeugen eines Frequenzmultiplexsignals, mit den Verfahrensschritten:

    a) Teilen eines Eingangssignals in eine Vielzahl von Eingangsabschnittssignalen;
    b) Erzeugen einer Mehrzahl von Frequenzmultiplexsignalen unter Verwendung von IFFT und dadurch Realisieren einer Digitalmodulation von Unterträgern, die orthogonal aufeinander stehen, gemäß der Vielzahl von Eingangsabschnittssignalen;
    c) selektives Invertieren und Nichtinvertieren von Polaritäten der Vielzahl von Multiplexsignalen, um jeweilige Zwischensignale zu erzeugen;
    d) Kombinieren der zwischensignale in ein erstes endgültiges Frequenzmultiplexsignal;

e) Erzeugen von Polaritätsinversionsinformationen bezüglich der Inversion und Nichtinversion von Polaritäten der Mehrzahl von Frequenzmultiplexsignalen;

f) Addieren der Polaritätsinversionssignal zum ersten endgültigen Frequenzmultiplexsignal, um ein zweites endgültiges Frequenzmultiplexsignal zu erzeugen;

g) Feststellen von Spitzenspannungen entsprechend der Mehrzahl von Frequenzmultiplexsignalen, Polaritäten der Spitzenspannungen und Zeitlagen des Auftretens von Spitzenspannungen;

h) Schätzen einer Spitzenleistung des zweiten endgültigen Frequenzmultiplexsignals aus den festgestellten Spitzenspannungen, den festgestellten Polaritäten der Spitzenspannungen und aus den festgestellten Zeitlagen des Auftretens der Spitzenspannungen; und

i) Steuern der Polaritätsinversion und Nichtinversion durch den Schritt c), wenn die geschätzte Spitzenleistung höher ist als eine vorbestimmte Bezugsleistung, um wenigstens eine der Polaritäten der Mehrzahl von Frequenzmultiplexsignalen zum Unterdrücken einer aktuellen Spitzenleistung des zweiten endgültigen Frequenzmultiplexsignals zu invertieren.

**4.** Verfahren zur Demodulation eines Frequenzmultiplexsignals, das nach dem Verfahren von Patentanspruch 3 erzeugt ist, in eine Vielzahl von Ausgangssignalen, mit den Verfahrensschritten:

Demodulieren des Frequenzmultiplexsignals in Polaritätsinversionsinformationen bezüglich einer Inversion und Nichtinversion der Polaritäten der Vielzahl von im Frequenzmultiplex-Signalerzeugungsgerät nach Patentanspruch 1 erzeugten Frequenzmultiplexsignalen durch Teilen eines Eingangssignals in eine Vielzahl von Eingangsabschnittssignalen und durch Realisieren einer Digitalmodulation von wechselweise orthogonalen Unterträgern gemäß der Vielzahl eingegebener Abschnittssignale unter Verwendung der Vielzahl von IFFT-Schaltungen;

unter Verwendung von FFT und somit Unterziehen des Frequenzmultiplexsignals der digitalen Demodulation, um Demodulationsausgangssignale entsprechend den jeweiligen Unterträgern zu erzeugen und

Invertieren und Nichtinvertieren von Polaritäten der Demodulationsausgangssignale als Reaktion auf die Polaritätsinversionsinformation, wodurch die Vielzahl von Ausgangssignalen erzeugt werden.

## Revendications

**1.** Appareil générant un signal multiplexé par répartition en fréquence comprenant :

un circuit d'entrée (2) pour diviser un signal d'entrée en plusieurs signaux de partie d'entrée ;

plusieurs circuits IFFT (33, 34, 35, 36) ;

un dispositif IFFT (4) pour générer plusieurs signaux multiplexés par répartition en fréquence en utilisant les circuits IFFT (33, 34, 35, 36) et mettre ainsi en oeuvre la modulation numérique de sous-porteuses, qui sont orthogonales entre elles, en fonction desdits signaux de partie d'entrée ;

des circuits de commande de polarité (42, 43, 44, 45) pour respectivement inverser et ne pas inverser sélectivement les polarités desdits signaux multiplexés par répartition en fréquence ;

un circuit d'addition (46) pour combiner les signaux de sortie des circuits de commande de polarité (42, 43, 44, 45) en un premier signal final multiplexé par répartition en fréquence ;

un moyen (41, 48) pour générer une information d'inversion de polarité concernant l'inversion et la non inversion des polarités des signaux multiplexés par répartition en fréquence ;

un modulateur (7) pour ajouter l'information d'inversion de polarité au premier signal final multiplexé par répartition en fréquence afin de générer un deuxième signal final multiplexé par répartition en fréquence ;

plusieurs circuits de détection de tension de crête (37, 38, 39, 40) pour détecter les tensions de crête qui correspondent auxdits signaux multiplexés par répartition en fréquence, les polarités des tensions de crête, et les positions temporelles des occurrences des tensions de crête ; et

un circuit de désignation de polarité (41) pour estimer une puissance de crête du deuxième signal final multiplexé par répartition en fréquence à partir des tensions de crête détectées, des polarités détectées des tensions de crête, et des positions temporelles détectées des occurrences des tensions de crête, et pour commander, quand la puissance de crête estimée est supérieure à une puissance de référence prédéterminée, les circuits de commande de polarité (42, 43, 44, 45) pour inverser au moins l'une des polarités des signaux multiplexés par répartition en fréquence afin de supprimer une puissance de crête actuelle du deuxième signal final multiplexé par répartition en fréquence.

**2.** Appareil de réception d'un signal multiplexé par répartition en fréquence pour démoduler un signal multiplexé par répartition en fréquence, qui est généré par l'appareil générant un signal multiplexé par répartition en fréquence de la revendication 1, en plusieurs signaux de sortie, l'appareil de réception d'un signal multiplexé par répartition en fréquence comprenant :

un premier circuit de démodulation (151A, 153) pour démoduler le signal multiplexé par répartition en fréquence en une information d'inversion de polarité concernant une inversion et une non inversion des polarités de plusieurs signaux multiplexés par répartition en fréquence qui sont générés dans l'appareil générant un signal multiplexé par répartition en fréquence de la revendication 1 en divisant un signal d'entrée en plusieurs signaux de partie d'entrée et en mettant en oeuvre une modulation numérique de sous-porteuses mutuellement orthogonales en fonction des signaux de partie d'entrée en utilisant plusieurs circuits IFFT ;
des circuits FFT (152) ;
un deuxième circuit de démodulation (151A, 152) comprenant les circuits FFT (152) pour utiliser les circuits FFT (152) et soumettre de ce fait le signal multiplexé par répartition en fréquence à une démodulation numérique afin de générer des signaux de sortie de démodulation qui correspondent respectivement aux sous-porteuses ; et
des circuits de correction de polarité (154, 155, 156, 157) pour inverser et ne pas inverser les polarités des signaux de sortie de démodulation en réponse à l'information d'inversion de polarité, générant de ce fait lesdits signaux de sortie.

3. Procédé de génération d'un signal multiplexé par répartition en fréquence, comprenant les étapes consistant à :

a) diviser un signal d'entrée en plusieurs signaux de partie d'entrée ;
b) générer plusieurs signaux multiplexés par répartition en fréquence en utilisant des circuits IFFT et mettre ainsi en oeuvre la modulation numérique de sous-porteuses, qui sont orthogonales entre elles, en fonction desdits signaux de partie d'entrée ;
c) inverser et ne pas inverser sélectivement les polarités desdits signaux multiplexés par répartition en fréquence afin de générer respectivement des signaux intermédiaires ;
d) combiner les signaux intermédiaires en un premier signal final multiplexé par répartition en fréquence ;
e) générer une information d'inversion de polarité concernant l'inversion et la non inversion des polarités des signaux multiplexés par répartition en fréquence ;
f) ajouter l'information d'inversion de polarité au premier signal final multiplexé par répartition en fréquence afin de générer un deuxième signal final multiplexé par répartition en fréquence ;
g) détecter des tensions de crête qui correspondent auxdits signaux multiplexés par répartition en fréquence, les polarités des tensions de crête, et les positions temporelles des occurrences des tensions de crête ;
h) estimer une puissance de crête du deuxième signal final multiplexé par répartition en fréquence à partir des tensions de crête détectées, des polarités détectées des tensions de crête, et des positions temporelles détectées des occurrences des tensions de crête ; et
i) quand la puissance de crête estimée est supérieure à une puissance de référence prédéterminée, commander l'inversion et la non inversion de polarité par l'étape c) pour inverser au moins l'une des polarités des signaux multiplexés par répartition en fréquence afin de supprimer une puissance de crête actuelle du deuxième signal final multiplexé par répartition en fréquence.

4. Procédé de démodulation d'un signal multiplexé par répartition en fréquence, qui est généré par le procédé de la revendication 3, en plusieurs signaux de sortie, comprenant les étapes consistant à :

démoduler le signal multiplexé par répartition en fréquence en une information d'inversion de polarité concernant une inversion et une non inversion des polarités de plusieurs signaux multiplexés par répartition en fréquence qui sont générés dans l'appareil générant un signal multiplexé par répartition en fréquence de la revendication 1 en divisant un signal d'entrée en plusieurs signaux de partie d'entrée et en mettant en oeuvre une modulation numérique de sous-porteuses mutuellement orthogonales en fonction des signaux de partie d'entrée en utilisant plusieurs circuits IFFT ;
utiliser des circuits FFT et soumettre de ce fait le signal multiplexé par répartition en fréquence à une démodulation numérique afin de générer des signaux de sortie de démodulation qui correspondent respectivement aux sous-porteuses ; et
inverser et ne pas inverser les polarités des signaux de sortie de démodulation en réponse à l'information d'inversion de polarité, générant de ce fait lesdits signaux de sortie.

# FIG. 1

EP 0 735 731 B1

## FIG. 2

99kHz
257 CARRIERS

−128   −21   0   21   128

FO

## FIG. 8

99kHz
257 CARRIERS

−256   −128   0   128   256

FO

## FIG. 3

FIG. 4

DATA DISTRIBUTOR

31

32

33 IFFT CIRCUIT
34 IFFT CIRCUIT
35 IFFT CIRCUIT
36 IFFT CIRCUIT

37 PEAK DET
38 PEAK DET
39 PEAK DET
40 PEAK DET

42 POLARITY CONTROL CIRCUIT
43 POLARITY CONTROL CIRCUIT
44 POLARITY CONTROL CIRCUIT
45 POLARITY CONTROL CIRCUIT

46 ADDING CIRCUIT

47

41 DATA POLARITY DECIDING CIRCUIT

48 OSCILLATORS

TO MODULATOR 7

EP 0 735 731 B1

# FIG. 5

*FIG. 9*

*FIG. 6*

# FIG. 7

INPUT DATA —○— 1 → INPUT CIRCUIT (2) → IFFT (4A) → GUARD INTERVAL (5) → D/A CONV (6) → LPF (6A) → MOD (7)

90° SHIFT (9)

CLOCK SIGNAL GENERATING CIRCUIT (3)

LOCAL OSC (8)

SPATIAL TRANSMISSION LINE ---- (12) ← TRANSMIT SECTION (11) ← FREQ CONV (10)

# FIG. 10

EP 0 735 731 B1

# FIG. 11

EP 0 735 731 B1

## FIG. 12

INPUT SIGNAL → 151A DEMOD → 151B LPF → 151C A/D → 151D GUARD INTERVAL → 161 FFT CIRCUIT

154 POLARITY CORRECTION CIRCUIT →
155 POLARITY CORRECTION CIRCUIT →
156 POLARITY CORRECTION CIRCUIT →
157 POLARITY CORRECTION CIRCUIT →

OUTPUT SIGNALS

EP 0 735 731 B1